(19) Europäisches Patentamt
European Patent Office
Office européen des brevets

(11) **EP 2 252 984 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **09713205.4**

(22) Anmeldetag: **19.02.2009**

(51) Int Cl.:
**G08B 29/18** (2006.01)   **G08B 17/103** (2006.01)

(86) Internationale Anmeldenummer:
**PCT/EP2009/052002**

(87) Internationale Veröffentlichungsnummer:
**WO 2009/103777 (27.08.2009 Gazette 2009/35)**

(54) **AUSWERTEN EINES DIFFERENZSIGNALS ZWISCHEN AUSGANGSSIGNALEN ZWEIER EMPFANGSEINRICHTUNGEN IN EINER SENSORVORRICHTUNG**

EVALUATION OF A DIFFERENCE SIGNAL BETWEEN OUTPUT SIGNALS OF TWO RECEIVING DEVICES IN A SENSOR APPARATUS

ÉVALUATION D'UN SIGNAL DIFFÉRENTIEL ENTRE DEUX SIGNAUX DE SORTIE DE DEUX DISPOSITIFS DE RÉCEPTION SITUÉS DANS UN DISPOSITIF DE DÉTECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.02.2008 EP 08101743**

(43) Veröffentlichungstag der Anmeldung:
**24.11.2010 Patentblatt 2010/47**

(73) Patentinhaber: **Siemens Aktiengesellschaft 80333 München (DE)**

(72) Erfinder: **VOLLENWEIDER, Walter CH-6312 Steinhausen (CH)**

(56) Entgegenhaltungen:
**EP-A- 0 099 729       EP-A- 0 877 345
DE-A1-102004 001 699       GB-A- 2 251 682
US-A- 4 857 895       US-A- 5 352 901
US-A- 5 493 119       US-B1- 6 611 320**

**Beschreibung**

Die vorliegende Erfindung betrifft allgemein das technische Gebiet der Haustechnik. Insbesondere betrifft die vorliegende Erfindung eine Sensorvorrichtung zum optischen Erfassen eines Objektes, wobei die Sensorvorrichtung zumindest eine Sendeeinrichtung zum Aussenden einer Sendestrahlung und zwei Empfangseinrichtungen zum Empfangen jeweils einer Empfangsstrahlung aufweist. Die Empfangsstrahlung weist dabei ein Streulicht auf, welches durch eine zumindest teilweise Streuung der Sendestrahlung an dem zu erfassenden Objekt erzeugt wird. Die vorliegende Erfindung betrifft ferner einen Näherungssensor und einen Gefahrenmelder, welche jeweils die genannte Sensorvorrichtung aufweisen.

Bekannte photoelektrische Annäherungs- oder Gefahrenmelder sind empfindlich auf Licht, welches auf einem anderem als dem vorgesehenen Weg über die Reflexion oder Streuung an dem zu erkennenden Objekt in einen optischen Empfänger gelangt. Es kann geschehen, dass Licht, welches von einem optischen Sender des Melders ausgestrahlt wird, vom Gehäuse oder von irgendwelchen sich im Erfassungsbereich bzw. im aktiven Volumen des Melders befindlichen Objekten zurückgeworfen wird und in den Empfänger gelangt. Auf diese Weise wird die Anwesenheit eines Objekts vorgetäuscht. Es kann jedoch auch vorkommen, dass Fremdlicht in den Empfänger gelangt, diesen übersteuert und so verhindert, dass ein zu erfassendes Objekt ordnungsgemäß erkannt wird.

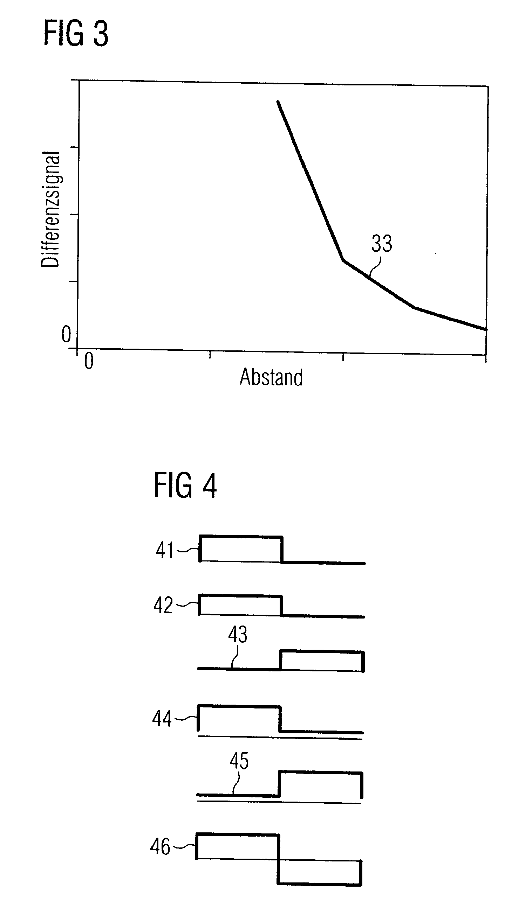

Aus der US 4,857,895 ist ein kombinierter Streulicht- und Extinktions-Rauchmelder mit geschlossener Detektionskammer bekannt. Entsprechend einer dortigen Ausführungsform gemäß FIG. 4 werden die Ausgangssignale zweier Photodioden verstärkt, bandpassgefiltert und gleichgerichtet. Jeweils eines der verstärkten, bandpassgefilterten und gleichgerichteten Ausgangssignale wird einem Komparator zugeführt. Beide verstärkten, bandpassgefilterten und gleichgerichteten Ausgangssignale werden einem gemeinsamen Komparator zugeführt. Die drei Komparatorausgangssignale werden anschließend einem TTL-Logik-Schaltkreis zu Weiterverarbeitung zugeführt.

Aus der US 5,352,901 ist ein Rauchdetektor bekannt, welcher sowohl das Prinzip der Vorwärtsstreuung als auch der Rückwärtsstreuung zur Rauchdetektion verwendet. Der Rauchdetektor weist zwei Paare von jeweils einem optischen Sender und einem optischen Empfänger auf. Jeweils ein optischer Empfänger befindet sich in dem direkten Strahl eines optischen Senders. Durch eine selektive Aktivierung der beiden optischen Sender kann unabhängig voneinander die durchgehende Strahlung und die gestreute Strahlung in einem Messvolumen des Rauchdetektors erfasst werden.

Die vorliegende Erfindung hat zur Aufgabe, den Einfluss von störenden Größen bei der photoelektrischen Erfassung eines Objekts soweit zu verringern, dass eine zuverlässige Objekterfassung mit einer geringen Fehlalarmrate erreicht wird.

Diese Aufgabe wird gelöst durch die Gegenstände der unabhängigen Patentansprüche. Vorteilhafte Ausführungsformen der Erfindung sind in den abhängigen Ansprüchen beschrieben.

Erfindungsgemäß ist der Auswerteeinheit ein Wechselanteil eines Differenzsignals zwischen einem ersten Ausgangssignal der ersten Empfangseinrichtung und einem zweiten Ausgangssignal der zweiten Empfangseinrichtung zuführbar ist.

Da mit dem Wechselanteil zumindest bei einer periodischen Modulation auch eine Amplitude des Wechselanteils des Differenzsignals bestimmbar ist, kann auf einfache Weise ebenfalls in der Auswerteeinheit oder in einer separaten Analyseeinheit das Verhältnis der Amplitude des Wechselstroms zu dem Wert des Gleichanteils gebildet werden. Anhand dieses Verhältnisses können beispielsweise mit Hilfe von geeigneten Algorithmen Rückschlüsse auf die Art des erkannten Objekts und/ oder auf die Geschwindigkeit gezogen werden, mit der sich das Objekt durch den Erfassungsbereich, in den Erfassungsbereich hinaus oder aus dem Erfassungsbereich hinaus bewegt. Insbesondere wird es möglich, gegenständliche Störeinflüsse wie beispielsweise das unerwünschte Eindringen von Insekten in den Erfassungsbereich der Sensorvorrichtung von einem zu erfassenden Objekt zuverlässig zu unterscheiden. Dabei kann es beispielsweise von Vorteil sein, wenn die Form und/oder das Streuvermögen des zu erfassenden Objekts zumindest annähernd bekannt sind. So kann das zu erfassende Objekt beispielsweise eine Person sein, die vor einer automatisch zu öffnenden Tür steht und einen Einlass erwartet.

Die beschriebene Sensorvorrichtung kann jedoch auch auf die Erfassung von Rauch optimiert werden. In diesem Fall handelt es sich bei der Sensorvorrichtung um einen Rauchmelder.

An dieser Stelle wird darauf hingewiesen, dass die Auswerteeinheit ferner derart eingerichtet sein kann, dass anhand des zeitlichen Verlaufs und/oder der Stärke der beiden Ausgangssignale die Größe des zu erfassenden Objekts bestimmbar ist. So kann beispielsweise bei einem Eindringen eines Objekts, dessen Größe oberhalb einer vorgegebenen Grenze liegt, eine erste Art von Meldung ausgegeben werden und dass bei einem Eindringen eines Objekts, dessen Größe unterhalb einer vorgegebenen Grenze liegt, eine zweite Art von Meldung ausgegeben werden.

Der beschriebenen Sensorvorrichtung liegt die Erkenntnis zugrunde, dass eine Vielzahl von unerwünschten Störeinflüssen, welche sich auf beide Empfangseinrichtungen auswirken, durch die Bestimmung eines Differenzsignales zwischen den Ausgangssignalen der beiden Empfangseinrichtungen auf elegante Weise eliminiert oder hinsichtlich der Stärke ihrer Auswirkung zumindest erheblich reduziert werden kann. Solche Störeinflüsse können beispielsweise durch den unerwünschten Empfang von Fremdstrahlung entstehen, welche von einer externen Strahlungsquelle ausgesendet wird und welche ggf. die jeweilige Empfangseinrichtung und/oder einen der Empfangseinrichtung nachgeschalteten Verstärker übersteuert. Ein weiterer mit der vorliegenden Erfindung zumindest reduzierter Störeinfluss kann darin bestehen, dass die erste Sendestrahlung durch eine Reflexion oder eine Streuung an einem Gegenstand, welcher sich in dem räumlichen Erfassungsbereich der beschriebenen Sendevorrichtung befindet und welcher nicht das zu erfassende Objekt darstellt, zumindest teilweise auf zumindest eine der beiden Empfangseinrichtungen gerichtet wird. Ein ähnlicher Störeinfluss kann beispielsweise dadurch entstehen, dass die Sendestrahlung an einem Teil eines Gehäuses der Sensorvorrichtung gestreut und/oder reflektiert wird.

Eine besonders effektive Störsignalunterdrükkung kann dann gewährleistet werden, wenn die von der ersten Sendeeinrichtung ausgesandte Sendestrahlung von dem zu erfassenden Objekt vorzugsweise auf die erste Empfangseinrichtung und nicht oder nur in wesentlich geringerem Maße auf die zweite Empfangseinrichtung fällt.

Unter dem Begriff Strahlung wird in diesem Dokument elektromagnetische Strahlung mit beliebigen Wellenlängen verstanden. Insbesondere kann es sich bei der elektromagnetischen Strahlung um Licht im sichtbaren, im infraroten oder im ultravioletten Spektralbereich handeln. Die elektromagnetische Strahlung kann neben einem vergleichsweise schmalbandigen Spektralbereich oder sogar einer monochromatischen Strahlung auch verschiedene Wellenlängen aufweisen, die ein kontinuierliches Spektrum oder verschiedene voneinander getrennte schmalbandige und/oder breitbandige Spektralbereiche darstellen. Die elektromagnetische Strahlung kann auch Wellenlängen aufweisen, die dem fernen infraroten und/oder dem fernen ultravioletten Spektralbereich zugeordnet sind. Auch Mikrowellenstrahlung oder jede andere Art von elektromagnetischer Strahlung kann grundsätzlich als Sendestrahlung und entsprechend als erste und/oder zweite Empfangsstrahlung verwendet werden. In entsprechender Weise soll sich der Begriff "optisch" alle genannten Spektralbereiche von elektromagnetischer Strahlung und keineswegs nur auf den sichtbaren Spektralbereich beziehen.

Gemäß einem Ausführungsbeispiel der Erfindung weist die Sensorvorrichtung ferner eine zweite Sendeeinrichtung und eine Steuereinrichtung auf. Die zweite Sendeeinrichtung ist eingerichtet zum Aussenden einer zweiten Sendestrahlung, wobei die erste Empfangsstrahlung und/oder die zweite Empfangsstrahlung ein Streulicht aufweist, welches durch eine zumindest teilweise Streuung der zweiten Sendestrahlung an dem Objekt erzeugt wird. Die Steuereinrichtung ist mit der ersten Sendeeinrichtung und mit der zweiten Sendeeinrichtung gekoppelt und derart eingerichtet, dass die erste Sendeeinrichtung unabhängig von der zweiten Sendeeinrichtung aktivierbar ist.

Die erste Sendeeinrichtung kann der ersten Empfangseinrichtung derart zugeordnet sein, dass die erste Empfangsstrahlung bevorzugt von der ersten Empfangseinrichtung erfasst wird. Dies bedeutet, dass im Vergleich zu der zweiten Empfangseinrichtung die erste Empfangseinrichtung einen größeren Anteil von der ersten Empfangsstrahlung erfasst. Bevorzugt wird die erste Empfangsstrahlung ausschließlich oder zumindest überwiegend von der ersten Empfangseinrichtung erfasst.

In entsprechender Weise kann die zweite Sendeeinrichtung der zweiten Empfangseinrichtung zugeordnet sein, so dass im Vergleich zu der ersten Empfangseinrichtung die zweite Empfangseinrichtung einen größeren Anteil von der zweiten Empfangsstrahlung erfasst. Bevorzugt wird die zweite Empfangsstrahlung ausschließlich oder zumindest überwiegend von der zweiten Empfangseinrichtung erfasst.

Die Zuordnung einer Sendeeinrichtung zu der jeweiligen Empfangseinrichtung kann insbesondere durch die relative räumliche Anordnung und/oder durch die relative räumliche Ausrichtung der bevorzugten Aussenderichtung der jeweiligen Sendeeinrichtung und der bevorzugten Empfangsrichtung der entsprechenden Empfangseinrichtung erfolgen.

Die Steuereinrichtung kann beispielsweise eine Treiberschaltung aufweisen, welche mit der ersten Sendeeinrichtung und mit der zweiten Sendeeinrichtung gekoppelt ist. Die Treiberschaltung kann derart eingerichtet sein, dass in einem ersten Zeitbereich lediglich die erste Sendeeinrichtung aktivierbar ist und in einem zweiten Zeitbereich lediglich die zweite Sendeeinheit aktivierbar ist.

Der erste Zeitbereich und der zweite Zeitbereich können zeitlich voneinander separiert sein, so dass hinsichtlich der Aktivierung der beiden Sendeeinrichtungen kein zeitlicher Überlapp besteht. Die beiden Zeitbereiche können dabei unmittelbar oder mit einem bestimmten zeitlichen Abstand aufeinander folgen.

Durch eine abwechselnde bzw. eine zeitlich gegenphasige Aktivierung der beiden Sendeeinrichtungen können die beiden Empfangsstrahlungen auf einfache Weise voneinander diskriminiert werden. Da zu jedem Zeitpunkt immer nur eine Sendestrahlung und die entsprechende Empfangsstrahlung vorhanden ist, kann auf einfache Weise eine feste Zuordnung der ersten Sendeeinrichtung zu der ersten Empfangseinrichtung und der zweiten Sendeeinrichtung zu der zweiten Empfangseinrichtung erreicht werden.

Die Steuereinrichtung und/oder die Treiberschaltung kann beispielsweise eine Signalquelle aufweisen, welche über ein nicht invertierendes Element mit der ersten Sendeeinrichtung und über ein invertierendes Element mit der zweiten Sendeeinrichtung gekoppelt ist. Die Signalquelle kann insbesondere ein Rechtecksignalgenerator sein. Das nicht invertierende Element kann ein gewöhnlicher nicht-invertierender Verstärker, das invertierende Element kann ein invertierender Verstärker sein.

Durch eine unabhängige Ansteuerung der beiden Sendeeinrichtungen kann die beschriebene Sensorvorrichtung in verschiedenen Betriebsarten betrieben werden. So ist beispielsweise ein asymmetrischer Betriebsmodus möglich, bei dem sowohl die erste Empfangseinrichtung als auch die zweite Empfangseinrichtung aktiv ist, wohingegen von den beiden Sendeeinrichtungen lediglich einer eingeschaltet und der andere gezielt ausgeschaltet ist. Wenn in diesem Betriebsmodus beide Empfangseinrichtungen zumindest annähernd das gleiche Signal zeigen, dann handelt es sich um ein fernes Echo. Dieses kann durch eine Reflexion der von der aktiven Sendeeinrichtung ausgesendeten Sendestrahlung an einem weit entfernten Gegenstand wie beispielsweise dem Fußboden eines überwachten Raumes stammen. In einem Gefahrenfall, bei dem Rauch in den überwachten Raum eindringt oder entsteht, wird der Rauch auch in die nahe Umgebung der Sensorvorrichtung eindringen, so dass die beiden Empfangseinrichtungen ein stark unterschiedliches Streusignal empfangen. Dabei wird die Empfangseinrichtung, welche der eingeschalteten Sendeeinrichtung zugeordnet ist, eine deutlich intensivere Empfangsstrahlung empfangen als die andere Empfangseinrichtung.

Gemäß einem weiteren Ausführungsbeispiel der Erfindung weist die Sensorvorrichtung ferner ein Schaltelement auf, welches mit der ersten Sendeeinrichtung derart gekoppelt ist, dass die erste Sendeeinrichtung deaktivierbar ist.

Die beschriebene Sensorvorrichtung kann somit in zwei verschiedenen Betriebsmodi betrieben werden. In einem ersten Betriebsmodus ist das Schaltungselement geschlossen und die erste Sendeeinrichtung aktivierbar. Dabei kann ein erstes Differenzsignal ermittelt werden. In einem zweiten Betriebsmodus ist das Schaltungselement offen und die erste Sendeeinrichtung ist und/oder bleibt auf alle Fälle ausgeschaltet. Dabei kann ein zweites Differenzsignal ermittelt werden.

Basierend auf dem ersten Differenzsignal und auf dem zweiten Differenzsignal können ggf. unter Verwendung von geeigneten Algorithmen, die beispielsweise in der Auswerteeinheit angewendet werden, Rückschlüsse auf die Größe und/oder die räumliche Lage eines erkannten Objekts gezogen werden.

Es wird darauf hingewiesen, dass selbstverständlich auch ein weiteres Schaltungselement vorgesehen sein kann, mit dem die zweite Sendeeinrichtung deaktivierbar ist.

Gemäß einem weiteren Ausführungsbeispiel der Erfindung weist die Sensorvorrichtung ferner ein Abgleichelement auf, welches in einem Sende-Signalpfad zu der ersten Sendeinrichtung oder in einem Empfangs-Signalpfad von der ersten Empfangseinrichtung angeordnet ist und welches derart variierbar ist, dass das Differenzsignal auf einen vorbestimmten Wert einstellbar ist.

Die beschriebene Verwendung von zumindest einem Abgleichelement hat den Vorteil, dass Langzeitschwankungen und/oder Drifts hinsichtlich der Stärke der Sendestrahlung oder der Stärke des ersten Ausgangssignals zuverlässig kompensiert werden können. Dies gilt auch für streuende Gegenstände, die sich stationär innerhalb oder außerhalb des Erfassungsbereichs der Sensorvorrichtung befinden und die ggf. zu einer Unterschiedlichkeit der beiden Ausgangssignale und damit zu einem Offset in dem Differenzsignal auch ohne die Präsenz eines zu erfassenden Objekts beitragen.

Unter dem Sende-Signalpfad kann in diesem Zusammenhang derjenige Teil einer elektronischen Schaltung verstanden werden, über welchen die Sendeeinrichtung angesteuert wird. Demzufolge kann sich der Sende-Signalpfad insbesondere zwischen einem Sendesignal-Generator und der Sendeeinrichtung erstrecken. Dem Sende-Signalpfad kann auch eine Treiberschaltung zugeordnet sein.

Unter dem Empfangs-Signalpfad kann in diesem Zusammenhang derjenige Teil einer elektronischen Schaltung verstanden werden, über welchen das Ausgangssignal der entsprechenden Empfangseinrichtung erfasst wird. Demzufolge kann sich der Empfangs-Signalpfad zwischen der Empfangseinrichtung und der Auswerteeinheit erstrecken. Das Abgleichelement wird jedoch bevorzugt zwischen der Empfangseinrichtung und demjenigen Element der Sensorvorrichtung angeordnet sein, in welchem die Differenz zwischen den beiden Ausgangssignalen bestimmt wird.

Es wird darauf hingewiesen, dass auch ein weiteres Abgleichelement vorgesehen sein kann, so dass sich sowohl im Sende-Signalpfad als auch im Empfangs-Signalpfad ein Abgleichelement befindet und diese Pfade unabhängig voneinander abgeglichen werden können. Ferner kann durch ein weiteres Abgleichelement der Einstellbereich vergrößert werden, so dass sich auch große Differenzen zwischen den beiden Ausgangssignalen kompensieren lassen.

Insbesondere für den Fall, dass die Sensorvorrichtung die oben beschriebene zweite Sendeeinrichtung aufweist, können auch weitere Abgleichelemente vorgesehen sein, die beispielsweise in einem Sende-Signalpfad zu der zweiten Sendeinrichtung und/oder in einem Empfangs-Signalpfad von der zweiten Empfangseinrichtung angeordnet sein können.

Der vorbestimmte Wert des Differenzsignals kann insbesondere ein Spannungspegel von 0 V oder eine Stromstärke von 0 mA sein. Der beschriebene Abgleich kann beispielsweise unter bestimmten Testbedingungen durchgeführt werden, bei denen sichergestellt ist, dass sich kein Objekt in dem Erfassungsbereich der Sensorvorrichtung befindet.

Zum Einstellen des Differenzsignals kann auf geeignete Algorithmen zurückgegriffen werden, die beispielsweise in der Auswerteeinheit angewendet werden. Auf diese Weise kann der Abgleich der beiden Ausgangsignale automatisch durchgeführt werden. Es muss lediglich sichergestellt werden, dass während des Abgleichs geeignete Testbedingungen vorliegen und sich insbesondere kein zu erfassendes Objekt in dem Erfassungsbereich der Sensorvorrichtung befindet.

Gemäß einem weiteren Ausführungsbeispiel der Erfindung sind die erste Empfangseinrichtung und die zweite Empfangseinrichtung relativ zueinander derart angeordnet und ausgerichtet, dass (a) im Falle einer Streuung der ersten Sendestrahlung an dem Objekt bei einer gegebenen Umgebungsstrahlung das erste Ausgangssignal der ersten Empfangseinrichtung unterschiedlich zum zweiten Ausgangssignal der zweiten Empfangseinrichtung ist, und dass (b) diese Ausgangssignale nach einem Wegbewegen des Objekts von der Sensorvorrichtung bei derselben Umgebungsstrahlung weniger stark unterschiedlich sind.

Es wird darauf hingewiesen, dass die gegebene Umgebungsstrahlung zumindest an dem Ort der Sensorvorrichtung bzw. an dem Ort der beiden Empfangseinrichtungen eine beliebig kleine Intensität oder sogar eine Intensität "Null" aufweisen kann. Dies kann bedeuten, dass abgesehen von den Empfangsstrahlungen, die durch eine Streuung der ersten und/oder der zweiten Sendestrahlung erzeugt werden, keine weitere Strahlung von der Sensorvorrichtung erfasst wird.

Die erste Empfangseinrichtung und die zweite Empfangseinrichtung können relativ zueinander auch derart angeordnet und ausgerichtet sein, dass (a) sofern sich das Objekt in einem ersten Abstand zu der Sensorvorrichtung befindet, das erste Ausgangssignal und das zweite Ausgangssignal unterschiedlich sind, und (b) sofern sich das Objekt in einem zweiten Abstand zu der Sensorvorrichtung befindet, welcher größer ist als der erste Abstand, das erste Ausgangssignal und das zweite Ausgangssignal weniger stark unterschiedlich sind.

In diesem Zusammenhang wird darauf hingewiesen, dass im Falle eines relativ nahen Objekts das Streulicht einen signifikanten Anteil an der ersten Empfangsstrahlung aufweist. Im Falle eines relativ fernen Objekts kann dass Streulicht mit zumindest annähernd gleicher Intensität auf die erste Empfangseinrichtung und auf die zweite Empfangseinrichtung treffen. Ebenso ist es im Falle eines fernen Objekts jedoch auch möglich, dass das Streulicht nur einen sehr kleinen oder sogar einen verschwindend kleinen Anteil an der auf die erste und/oder auf die zweite Empfangseinrichtung auftreffenden Strahlungsintensität hat. So kann beispielsweise der größte Teil der auftreffenden Strahlungsintensität von einer externen Störstrahlungsquelle kommen, deren Strahlung von fern direkt oder indirekt mit zumindest ähnlicher Intensität auf die beiden Empfangseinrichtungen trifft.

Die Anordnung und die Ausrichtung der Sendeeinrichtung und der beiden Empfangseinrichtungen können so sein, dass die erste Sendestrahlung bevorzugt in eine erste Richtung emittiert wird, die von dem Erfassungsbereich der zweiten Empfangseinrichtung weg gerichtet ist. Auf diese Weise kann gewährleistet werden, dass von einem nahen Objekt wenig oder gar keine Streustrahlung in die zweite Empfangseinrichtung trifft und deutlich mehr bzw. eine deutlich intensivere Streustrahlung in die erste Empfangseinrichtung trifft. Dies hat den Vorteil, dass infolge der beschriebenen Differenzbildung zwischen dem ersten Ausgangssignal und dem zweiten Ausgangssignal Störeinflüsse, die von einer externen Störstrahlungsquelle erzeugt werden, automatisch eliminiert werden und bei der weiteren Signalauswertung durch die Auswerteeinheit auch nicht mehr berücksichtigt werden müssen.

Die externe Störstrahlungsquelle kann beispielsweise die Sonne sein, welche Sonnenstrahlung direkt oder indirekt auf die beschriebene Sensorvorrichtung richtet.

Falls die Sensorvorrichtung auch eine zweite Sendeeinrichtung aufweist, kann die erste Sendestrahlung auch zumindest annähernd parallel zu der zweiten Sendestrahlung emittiert werden. Falls die erste Empfangseinrichtung dann nahe bei der ersten Sendeeinrichtung und die zweite Empfangseinrichtung dann nahe bei der zweiten Sendeeinrichtung angeordnet ist, dann wird die erste Empfangseinrichtung im Wesentlichen der ersten Sendeeinrichtung zugeordnet sein und die zweite Empfangseinrichtung wird im Wesentlichen der zweiten Sendeeinrichtung zugeordnet sein.

Die beiden Empfangseinrichtungen können dabei insbesondere einen so großen Abstand voneinander aufweisen, dass bei üblichen zu erfassenden Objekten die erste Empfangsstrahlung nicht von der zweiten Empfangseinrichtung und die zweite Empfangsstrahlung nicht von der ersten Empfangseinrichtung erfasst wird. Für eine relativ weit von der Sensorvorrichtung entfernte Störstrahlungsquelle kann die Störstrahlung zumindest im zeitlichen Mittel zumindest annähernd gleichmäßig auf die erste Empfangseinrichtung und auf die zweite Empfangseinrichtung auftreffen. Infolge der beschriebenen Differenzbildung wird dann der Einfluss der Störstrahlung bereits vor einer Signalverarbeitung automatisch eliminiert oder zumindest stark reduziert.

Gemäß einer Ausführungsvariante weist die erste Sendeeinrichtung zumindest zwei Sendelemente auf und/oder zumindest eine der beiden Empfangseinrichtungen weist zumindest zwei Empfangselemente auf. Die Realisierung der ersten Sendeeinrichtung, der ersten Empfangseinrichtung und/oder der zweiten Empfangseinrichtung mit mehreren einzelnen Sende- bzw. Empfangselementen hat den Vorteil, dass auf einfache und preiswerte Weise eine hocheffiziente Sende- bzw. Empfangseinrichtung aufgebaut werden kann, wobei die zur Verfügung stehende Energie besonders gut ausgenutzt wird. Dabei können die einzelnen Sende- bzw. Empfangselemente in einer Serien- und/oder in einer Parallelschaltung miteinander kombiniert sein. Die miteinander kombinierten Sendeelemente sind dabei bevorzugt derart zueinander angeordnet, dass sich ihre ausgesandten Sendeteilstrahlen möglichst überlappen und so zu einer intensiven Sendestrahlung führen. In entsprechender Weise sind die miteinander kombinierten Empfangselemente bevorzugt derart zueinander angeordnet, dass sie die jeweilige Empfangsstrahlung möglichst effizient erfassen.

Gemäß einer weiteren Ausführungsvariante weist die zweite Sendeeinrichtung zumindest zwei Sendelemente auf. Für die bevorzugte relative Anordnung der beiden Sendeelemente gilt dann das gleiche wie für die zumindest zwei Sendeelemente, die in Kombination miteinander die erste Sendeeinrichtung bilden.

Gemäß einer weiteren Ausführungsvariante weist die erste Empfangseinrichtung und/oder die zweite Empfangseinrichtung zumindest einen Halbleiterdetektor und insbesondere eine PIN-Diode auf. Dies hat den Vorteil, dass die zumindest eine optische Empfangseinrichtung auf preiswerte Weise realisiert werden kann, eine hohe Empfindlichkeit aufweist und einfach in einer elektronischen Schaltungsanordnung beschaltet werden kann.

Gemäß einem weiteren Ausführungsbeispiel der Erfindung ist eine Subtraktionseinheit eingangsseitig mit der ersten Empfangseinrichtung und der zweiten Empfangseinrichtung und ausgangsseitig mit der Auswerteeinheit gekoppelt. Die Subtraktionseinheit kann eingerichtet sein zum Bilden des Differenzsignals basierend aus den beiden Ausgangssignalen. Die Subtraktionseinheit kann beispielsweise mittels eines oder mehrerer Operationsverstärker, mittels gegengekoppelter Differenzverstärker oder mittels einer diskreten elektronischen Schaltung realisiert werden.

Der Subtraktionseinheit können direkt die Ausgangssignale der beiden Empfangseinrichtungen zugeführt werden. Alternativ kann zumindest eines der beiden Ausgangssignale auch noch in geeigneter Weise verstärkt und/oder mittels eines elektronischen Filters gefiltert werden, so dass erst danach die Differenz mit einem geeigneten Subtrahierer gebildet wird.

Die Subtraktionseinheit kann beispielsweise mittels geeigneter Hardware-Komponenten realisiert sein, welche basierend auf analogen Ausgangssignalen der beiden Empfangseinrichtungen ein Differenzsignal zwischen dem ersten Ausgangssignal und dem zweiten Ausgangssignal ermitteln. Dieses Differenzsignal kann dann in geeigneter Weise durch einen Prozessor der Auswerteeinheit ausgewertet werden.

Die Subtraktionseinheit kann ebenso in der Auswerteeinheit integriert sein und dort entweder mittels Hardware, mittels Software oder mittels meiner Kombination von Hardware und Software realisiert sein.

Durch die Auswertung eines Differenzsignals kann beispielsweise der Einfluss von Fremdlichtquellen eliminiert werden, welche von außen Licht in die beiden Empfangseinrichtungen einstrahlen und somit bei jeder einzelnen Empfangseinrichtung für ein fälschlicherweise erhöhtes Ausgangssignal sorgen.

Gemäß einem weiteren Ausführungsbeispiel der Erfindung sind die erste Empfangseinrichtung und die zweite Empfangseinrichtung zueinander mit umgekehrter Polarität parallel geschaltet. Dies bedeutet, dass die Empfangseinrichtung auch insbesondere oder lediglich diejenigen elektrischen Leitungen aufweisen kann, welche die parallele Schaltung der beiden Empfangseinrichtungen bewirken. Damit kann auf vorteilhafte Weise ohne weitere apparative Vorkehrungen bereits vor der Zuführung des ersten und/oder des zweiten Ausgangssignals zu einer Verstärkerschaltung das erfindungsgemäße Differenzsignal gebildet werden.

Gemäß einem weiteren Ausführungsbeispiel der Erfindung weist die Sensorvorrichtung ferner ein Grundelement mit einer planen Montagefläche auf, wobei die erste Sendeeinrichtung, die erste Empfangseinrichtung, eine zum Aussenden einer zweiten Sendestrahlung eingerichtete zweite Sendeeinrichtung und die zweite Empfangseinrichtung an der Montagefläche angebracht sind. Dabei ist die erste Empfangseinrichtung neben der ersten Sendeeinrichtung angeordnet und zum Empfangen der ersten Empfangsstrahlung eingerichtet, welche aus einer Rückstreuung der ersten Sendestrahlung an einem in einem ersten Detektionsraum befindlichen Messobjekt resultiert. Ferner ist die zweite Empfangseinrichtung neben der zweiten Sendeeinrichtung angeordnet ist und zum Empfangen der zweiten Empfangsstrahlung eingerichtet, welche aus einer Rückstreuung der zweiten Sendestrahlung an einem in einem zweiten Detektionsraum befindlichen Messobjekt resultiert.

Die beschriebene Sensorvorrichtung kann somit durch eine plane Anordnung sämtlicher optoelektronischen Komponenten an einer gemeinsamen Montagefläche in einer besonders flachen Bauform realisiert werden.

Falls die Sensorvorrichtung zur Detektion von Rauch eingesetzt wird, werden bevorzugt diejenigen Rauchpartikel erfasst, die sich in unmittelbarer Nähe zur Sensorvorrichtung befinden, da nur diese in signifikanter Weise zu der Erzeugung von Empfangsstrahlung beitragen.

Vor diesem Hintergrund werden in dieser Anmeldung die beiden Begriffe "Detektionsraum" und "Blickfeld der Sensorvorrichtung" voneinander unterschieden.

Unter dem Begriff "Detektionsraum" wird dabei eine Schicht verstanden, die unmittelbar an der Sensorvorrichtung angrenzt. Rauch, welcher sich innerhalb des Detektionsraumes befindet, wird dann zu einem signifikanten und messbaren Streusignal führen. Rauch, welcher sich außerhalb des Detektionsraumes befindet und welcher demzufolge von der Sensorvorrichtung weiter beabstandet ist, wird nicht in nennenswerter Weise zu dem empfangenem Rückstreusignal beitragen.

Unter dem Begriff "Blickfeld der Sensorvorrichtung" wird der Bereich verstanden, der von der Sensorvorrichtung grundsätzlich erfasst wird und der außerhalb des Detektionsraumes liegt. Wie oben bereits erläutert, kann Rauch, der sich in dem Blickfeld des Rauchmelders befindet, nicht in signifikanter Weise zu dem Streusignal beitragen. Dies gilt jedoch nicht für gegenständliche Streuobjekte wie beispielsweise Insekten oder Möbelstücke. Diese können auch dann, wenn sie sich lediglich im Blickfeld der Sensorvorrichtung befinden, zu einem nennenswerten Streusignal führen.

Durch die flache Bauform ist es möglich, die beschriebene Sensorvorrichtung ohne großen Aufwand in die Wände und insbesondere in die Decken von zu überwachenden Räumen zu integrieren. Auch im Falle einer Aufputzmontage lässt sich die beschriebene Sensorvorrichtung leicht an Wände und/oder Decken anbringen. Dabei nimmt die Sensorvorrichtung lediglich einen geringen Platzbedarf ein. Außerdem kann die beschriebene Sensorvorrichtung dezent angebracht werden, so dass sie von Personen, die sich in dem von der Sensorvorrichtung überwachten Raum befinden, nicht oder zumindest nicht für die Raumgestaltung störend wahrgenommen wird.

Falls es sich bei der Sensorvorrichtung um einen Rauchmelder handelt, dann ist zu erfassende Objekt Rauch, welcher einzelne Rauchpartikel aufweist, die von dem beschriebenen auf dem Streustrahlungsprinzip beruhenden Rauchmelder detektiert werden. Das zu erfassende Objekt kann jedoch in der Praxis auch ein anderes Objekt wie beispielsweise ein Insekt oder ein versehentlich in den Detektionsraum eingebrachter Gegenstand sein, welche ebenfalls ein Streu- bzw. ein Rückstreusignal erzeugen. Die Rückstreusignale von in dem Detektionsraum befindlichen gegenständlichen Objekten wie insbesondere Insekten sind jedoch im Vergleich zu den durch Rauch verursachten optischen Rückstreusignalen erheblich stärker. Durch eine geeignete Bewertung der Ausgangssignale der ersten und der zweiten Empfangseinrichtung durch die Auswerteeinheit können solche Ereignisse jedoch zuverlässig von dem tatsächlichen Vorhandensein von Rauch unterschieden werden.

Falls die Sensorvorrichtung in Rückstreugeometrie betrieben wird, dass sind auf vorteilhafte Weise Optiken für die Sendeeinrichtungen und/oder die Empfangseinrichtungen nicht erforderlich. Dadurch kann die beschriebene Sensorvorrichtung besonders kostengünstig hergestellt werden und eignet sich als preiswertes Massenprodukt auch für die Überwachung von Privaträumen.

Die Messung der Streustrahlung kann bei dem beschrieben Rauchmelder in Rückstreugeometrie von annähernd 180° erfolgen. Die Abweichung des Streuwinkels von einer exakten Rückstreuung und damit von exakt 180° ergibt sich (a) aus der Beabstandung zwischen der ersten bzw. zweiten Sendeeinrichtung und der ersten bzw. zweiten Empfangseinrichtung und (b) aus dem Abstand des Ortes der Rückstreuung von der jeweiligen Sendeeinrichtung bzw. Empfangseinrichtung. Für eine Streuung an einem sich in dem Detektionsraum befindlichen Streuobjekt kann sich infolge einer geringen Schichtdicke des Detektionsraum eine deutliche Abweichung des Streuwinkels von 180° ergeben.

Die beschriebene Sensorvorrichtung unterscheidet sich insbesondere durch die verwendete Rückstreugeometrie von herkömmlichen Rauchmeldern, welche entweder als Vorwärtsstreuer einen Streuwinkel von ungefähr 60° oder als Rückwärtsstreuer einen Streuwinkel von ungefähr 120° zwischen Beleuchtungslicht und Streulicht aufweisen.

Die opto- bzw. photoelektronischen Komponenten der Sensorvorrichtung bzw. des Rauchmelders können auf vorteilhafte Weise in Surface Mount Technology aufgebrachte Halbleiterdioden sein. In diesem Fall kann das Grundelement eine Leiterplatte sein oder zumindest eine Leiterplatte aufweisen, an welcher Halbleitersende- und Halbleiterempfangsdioden in bekannter Weise angebracht und elektrisch kontaktiert sind.

Gemäß einem weiteren Ausführungsbeispiel der Erfindung sind die erste Sendeeinrichtung und die erste Empfangseinrichtung durch eine erste Reflexionslichtschranke und/oder die zweite Sendeeinrichtung und der zweite Empfangseinrichtung durch eine zweite Reflexionslichtschranke realisiert. Dies hat den Vorteil, dass handelsübliche Reflexionslichtschranken verwendet werden können. Eine relative Justierung zwischen einer Sendeeinrichtung und der entsprechenden Empfangseinrichtung zur Anpassung der Abstrahlrichtung der Sendeeinrichtung an die Empfangsrichtung der Empfangseinrichtung ist infolge der festen relativen Anordnung dieser optoelektronischen Komponenten innerhalb eines gemeinsamen Bauelements oder zumindest innerhalb eines gemeinsamen Gehäuses nicht erforderlich. Die Sensorvorrichtung kann deshalb auf vorteilhafte Weise mit einem geringen Montageaufwand aufgebaut werden.

Gemäß einem weiteren Ausführungsbeispiel der Erfindung ist die Richtung des ersten Sendestrahlung in Bezug zu einer Normalen der Montagefläche in Richtung der ersten Empfangseinrichtung geneigt und/oder die Richtung der zweiten Sendestrahlung ist in Bezug zu der Normalen der Montagefläche in Richtung der zweiten Empfangseinrichtung geneigt.

Unter dem Begriff Richtung ist in diesem Zusammenhang die mittlere Abstrahlrichtung der ersten und/oder der zweiten Sendeeinrichtung gemeint. Dies bedeutet, dass die Sendeeinrichtungen nicht nur Laser wie beispielsweise ein VCSEL (Vertical Cavity Surface Emitting Laser) sein können, welche ein nahezu paralleles Lichtbündel aussenden. Die Sendeeinrichtungen können auch eine Abstrahlcharakteristik mit divergierenden Lichtstrahlen aufweisen, welche um die entsprechende zu der jeweiligen Empfangseinrichtung hin geneigte mittlere Abstrahlrichtung eine gewisse Winkelverteilung aufweisen.

Gemäß einem weiteren Ausführungsbeispiel der Erfindung verlaufen die Richtung der ersten Sendestrahlung und die Richtung der zweiten Sendestrahlung parallel zueinander.

Dabei können sich zwei räumlich voneinander getrennte Detektionsräume ergeben, deren Beabstandung von dem Abstand zwischen den beiden Sendeeinrichtungen auf der Montagefläche des Grundelements abhängt.

Im Falle von divergierenden bzw. aufgeweiteten Lichtstrahlen für die erste und/oder für die zweite Sendestrahlung bezieht sich die Richtung der Sendestrahlung jeweils auf die mittlere Abstrahlrichtung.

Gemäß einem weiteren Ausführungsbeispiel der Erfindung stellen die erste Sendeeinrichtung und die zweite Sendeeinrichtung sowie die erste Empfangseinrichtung und die zweite Empfangseinrichtung jeweils eine äußere Begrenzung der Sensorvorrichtung. Dies bedeutet, dass sich weder die Sendeeinrichtungen noch die Empfangseinrichtungen innerhalb eines Gehäuses der Sensorvorrichtung befinden. Außerhalb der photoelektrischen Komponenten Sendeeinrichtung und Empfangseinrichtung befinden sich somit keine anderen Teile der beschriebenen Sensorvorrichtung. Dies gilt auch für Abdeckungen oder Gehäuseteile. Damit kann die Sensorvorrichtung derart ausgebildet sein, dass sich zwischen den photoelektrischen Komponenten und dem jeweiligen Detektionsraum keine weitere ggf. optisch transparente Abdeckung befindet, durch welche die photoelektrischen Komponenten vor Verschmutzung geschützt sind. Derartige Abdeckungen oder Schmutzschilder sind bei vielen Anwendungen insbesondere im Heimbereich jedoch auch gar nicht erforderlich.

Ferner können sich auch der erste Detektionsraum und/oder der zweite Detektionsraum außerhalb der Sensorvorrichtung befinden. In diesem Fall stellt die Sensorvorrichtung einen offenen Rauchmelder dar, welcher keine eigene optische Kammer aufweist.

Gemäß einem weiteren Ausführungsbeispiel der Erfindung ist die erste Empfangseinrichtung eingerichtet zum Erfassen eines zeitlichen Verlaufs der ersten Empfangsstrahlung.

Durch eine Erfassung der von der ersten Empfangseinrichtung erfassten Streustrahlung als Funktion der Zeit können auf einfache Weise Informationen über ein in den ersten Detektionsraum eindringendes Streuobjekt gewonnen werden. Handelt es sich nämlich bei dem eindringenden Streuobjekt um Rauch, so wird die zeitliche Änderung der Streustrahlung vergleichsweise langsam erfolgen, da Rauch üblicherweise kontinuierlich in den Detektionsraum eindringt. Im Gegensatz dazu wird es bei einem gegenständlichen Objekt wie beispielsweise einem Insekt oder einem von einer Person versehentlich in das Blickfeld der Sensorvorrichtung eingebrachten Gegenstand zu einer im Wesentlichen abrupten Änderung der Streustrahlungsintensität kommen. Somit können anhand der Stärke der zeitlichen Änderung der von der ersten Empfangseinrichtung erfassten Streustrahlungsintensität zuverlässige Informationen über die Art des Objekts gewonnen werden.

Gemäß einem weiteren Ausführungsbeispiel der Erfindung ist die erste Sendeeinrichtung eingerichtet zum Aussenden einer gepulsten ersten Sendestrahlung.

Die Verwendung von gepulster Sendestrahlung mit sehr kurzen Pulsen mit einer zeitlichen Länge von bevorzugt weniger als 1 ns in Verbindung mit einer Empfangseinrichtung, welche eine zeitliche Auflösung aufweist, die ebenfalls im Nanosekundenbereich liegt, hat den Vorteil, dass Informationen über die räumliche Verteilung der streuenden Objekte gewonnen werden können. Dabei kann beispielsweise ein erstes optisches Reflexionssignal, welches von dem Boden eines an der Decke eines Raumes angeordneten Rauchmelders herrührt, von einem zweiten Reflexionssignal, welches von einer Streuung an Rauch herrührt, zeitlich diskriminiert werden. Dabei wird die Tatsache ausgenutzt, dass Rauch lediglich dann ein nennenswertes Reflexionssignal liefert, wenn er sich innerhalb eines nahe an dem Rauchmelder befindlichen Detektionsraumes befindet. Dann kann ein dem Rauch zugeordnetes Rückstreulicht eine verschwindende Lichtlaufzeit zugeordnet werden. Im Gegensatz dazu wird für das Rückstreulicht, welches von dem Boden des überwachten Raumes herrührt, eine durch den Abstand zwischen dem Rauchmelder und dem Boden bestimmte endliche Lichtlaufzeit gemessen. Dabei wird ausgenutzt dass der durch die Lichtgeschwindigkeit vorgegebene Lichtweg, den ein Lichtpuls innerhalb einer Nanosekunde zurücklegt, 30 cm lang ist.

In diesem Zusammenhang wird darauf hingewiesen, dass der Detektionsraum eine Schicht sein kann, die sich unmittelbar unterhalb des typischerweise an der Decke eines Raumes angeordneten Rauchmelders befindet. Die Schichtdicke des Detektionsraumes kann beispielsweise ungefähr 10 mm betragen.

An Rauch gestreutes Licht weist demzufolge einen Signalweg von ungefähr 5 bis 20 mm auf. Daraus ergibt sich eine Signalverzögerung von 17 bis 67 Picosekunden. Mit anderen Worten, das Rauchsignal hat lediglich eine verschwindende und nicht messbare Zeitverzögerung und ebenso eine mit vernünftigem Aufwand nicht messbare Signalverbreiterung. Allerdings können weiter entfernte störende gegenständliche Streuobjekte über die Lichtlaufzeit bei einer ausreichenden Zeitauflösung des entsprechenden Lichtempfängers von einer Rückstreuung an nahe des Rauchmelders befindlichem Rauch unterschieden werden. Als Beispiel ergibt ein 15 cm von der Sensorvorrichtung bzw. dem Rauchmelder entfernter Gegenstand abgesehen von einem sehr starken Signal auch eine messbare Signalverzögerung von einer Nanosekunde. Zusätzlich kann sich evtl. auch eine Pulsverbreiterung ergeben, wenn nämlich der Gegenstand mehrere Rückstreubereiche aufweist, die unterschiedlich weit von dem Rauchmelder beabstandet sind.

So kann beispielsweise auch aus einer Pulsdauer der empfangenen Streustrahlung, welche Pulsdauer länger ist als die Pulsdauer der entsprechenden Sendestrahlung, geschlossen werden, dass die Sendestrahlung an verschiedenen Gegenständen zurückgestreut sind, welche unterschiedlich weit von der Sensorvorrichtung beabstandet sind. Eine derartige durch unterschiedliche Gegenstände verursachte zeitliche Verbreiterung oder Strukturierung der Empfangsstrahlungspulse ist demzufolge ein zuverlässiges Zeichen, dass es sich bei dem im Detektionsraum befindlichen Streuobjekt nicht um Rauch, sondern um Reflexe am Boden oder an anderen nahen Gegenständen, handelt.

Im Gegensatz dazu führt Rauch zu einer nicht messbaren Pulsverbreiterung. Dies gilt jedenfalls dann, wenn für den Rauchmelder lediglich preiswerte Komponenten und keine optischen Hochleistungsmessinstrumente zur Messung von Verzögerungszeiten im Bereich von Pico- oder Femtosekunden verwendet werden.

Damit können anhand der Pulslänge und Pulsstruktur des empfangenen Streustrahlungssignals körperliche Gegenstände wie beispielsweise Insekten oder versehentlich in das Blickfeld des Rauchmelders eingebrachte Gegenstände zuverlässig von einem in dem Detektionsraum befindlichen Rauch unterschieden werden.

Außerdem kann durch eine Messung der Zeitdifferenz t zwischen dem Aussenden eines Sendestrahlungspulses und dem zurück gestreuten und von der Empfangseinrichtung detektierten Streustrahlungspulses bestimmt werden, wie weit der jeweilige Gegenstand von der Sendeeinrichtung bzw. der Empfangseinrichtung entfernt ist. Die Entfernung s zwischen dem Gegenstand und der Sensorvorrichtung ergibt sich dabei durch folgende Gleichung:

$$s = c \cdot t/2$$

Dabei steht c für die Lichtgeschwindigkeit.

Es wird darauf hingewiesen, dass selbstverständlich auch die zweite Sendeeinrichtung zum Aussenden von gepulster Sendestrahlung eingerichtet sein kann. Ebenso kann die zweite Empfangseinrichtung zum Erfassen eines zeitlichen Verlaufs der zweiten Empfangsstrahlung eingerichtet sein.

Nachfolgend werden einige verfahrensbezogene Aspekte der Erfindung beschrieben.

Ein Verfahren zum Detektieren von Rauch unter Verwendung der oben beschriebenen Sensorvorrichtung bzw. des oben beschriebenen Rauchmelders weist auf (a) ein Aussenden zumindest der ersten Sendestrahlung durch die erste Sendeeinrichtung und (b) ein Empfangen zumindest der ersten Empfangsstrahlung mittels der ersten Empfangseinrichtung, wobei die Empfangsstrahlung aus einer Rückstreuung der ersten Sendestrahlung an einem in einem ersten Detektionsraum befindlichen Objekt resultiert.

Dem beschriebenen Verfahren liegt die Erkenntnis zugrunde, dass auch in Rückwärtsstreugeometrie empfangene Empfangsstrahlung genügend starke Signale erzeugen kann, die für eine zuverlässige Detektion von Rauch ausgewertet werden können. Durch diese von den Erfindern mittels experimentellen Versuchen verifizierte Erkenntnis ist es nun möglich, Rauchmelder innerhalb einer besonders kompakten Bauform zu realisieren. Dabei können die photoelektrischen Komponenten auf einer gemeinsamen Leiterplatte angeordnet werden.

Gemäß einem weiteren Ausführungsbeispiel der Erfindung weist das Verfahren zusätzlich auf ein Empfangen der zweiten Empfangsstrahlung mittels der zweiten Empfangseinrichtung.

Bei einer Aktivierung von lediglich einer der beiden Empfangseinrichtungen kann durch eine gemeinsame Auswertung der von beiden Empfangseinrichtungen gemessenen Empfangsintensitäten eine zuverlässige Detektion von Rauch stattfinden. Wie oben bereits dargelegt, wird nämlich durch eine Rückstreuung an räumlich verteilten Rauchpartikeln die von der ersten Empfangseinrichtung empfangene Empfangsstrahlung deutlich größer sein als die Strahlungsintensität, welche auf die zweite Empfangseinrichtung trifft, die der nicht aktivierten Sendeeinrichtung zugeordnet ist. Erst bei einer Streuung an einem sehr weit entfernten Gegenstand werden die beiden Intensitäten, die jeweils auf eine der beiden Empfangseinrichtungen treffen, zumindest annähernd gleich sein.

Gemäß einem weiteren Ausführungsbeispiel der Erfindung weist die erste Sendestrahlung Strahlungspulse auf. Durch die Einführung einer Zeitabhängigkeit der Sendestrahlung durch die erste Sendeeinrichtung können zusätzliche Informationen über die räumliche Lage von Streuobjekten erhalten werden, die sich in dem ersten Detektionsraum oder in einem der ersten Sendeeinrichtung und der ersten Empfangseinrichtung zugeordneten Blickfeld der Sensorvorrichtung bzw. des Rauchmelders befinden.

Selbstverständlich kann auch die von der zweiten Sendeeinrichtung ausgesandte zweite Sendestrahlung Strahlungspulse aufweisen.

Gemäß einem weiteren Ausführungsbeispiel der Erfindung weist das Verfahren zusätzlich auf ein Messen der Länge der als erste Empfangsstrahlung zurück gestreuten Strahlungspulse. Dies hat den Vorteil, dass Informationen über die räumliche Anordnung von verschiedenen Gegenständen innerhalb des Blickfelds des Rauchmelders gewonnen werden können.

So führt eine große räumliche Verteilung der Streuobjekte je nach Pulslänge zu einer zeitlichen Verbreiterung oder einer Strukturierung der zurück gestreuten Empfangsstrahlungspulse im Vergleich zu den ausgesandten Sendestrahlungspulsen. Dies liegt daran, dass die Sendestrahlung an verschiedenen Gegenständen zurückgestreut wird, welche unterschiedlich weit von der Sensorvorrichtung beabstandet ist. Bei Berücksichtigung der endlichen Lichtgeschwindigkeit führen unterschiedliche optische Weglängen zu einer zeitlichen Verbreiterung oder Strukturierung der empfangenen Empfangsstrahlungspulse. Im Gegensatz dazu wird eine Rückstreuung an Rauch zu keiner deutlichen Verlängerung der Empfangsstrahlungspulse gegenüber den Sendestrahlungspulsen führen. Wie oben bereits erläutert liegt dies daran, dass lediglich Rauch, welcher sich in dem Detektionsraum in unmittelbarer Nähe des Rauchmelders befindet, ein nennenswertes Rückstreusignal liefert. Rauch, welcher sich lediglich im Blickfeld des Rauchmelders befindet, liefert üblicherweise ein nicht messbares Rückstreusignal. Damit können anhand der Pulslänge und der Pulsstruktur der empfangenen Empfangsstrahlung körperliche Gegenstände wie beispielsweise Insekten oder versehentlich in das Blickfeld des Melders eingebrachte Gegenstände zuverlässig von in den Detektionsraum eindringendem Rauch unterschieden werden.

Es wird darauf hingewiesen, dass selbstverständlich auch die zeitlichen Längen von als zweiter Sendestrahlung zurück gestreuter Strahlungspulse gemessen und entsprechend ausgewertet werden können.

Gemäß einem weiteren Ausführungsbeispiel der Erfindung weist das Verfahren zusätzlich auf ein Messen der Zeitdifferenz zwischen dem Aussenden eines Pulses der ersten Sendestrahlung und dem Empfangen des entsprechenden Pulses der zurück gestreuten ersten Empfangsstrahlung. Dies hat den Vorteil, dass der Abstand eines Streuobjekts von der ersten Sendeeinrichtung bzw. der ersten Empfangseinrichtung absolut bestimmt werden kann.

Selbstverständlich kann auch die Zeitdifferenz zwischen dem Aussenden eines Pulses der zweiten Sendeeinrichtung und dem Empfangen des entsprechenden Pulses der zurück gestreuten zweiten Empfangsstrahlung gemessen und in entsprechender Weise ausgewertet werden.

Gemäß einem weiteren Aspekt der Erfindung wird ein Näherungssensor zum optischen Erfassen der Anwesenheit eines Objektes in einem Erfassungsbereich beschrieben. Der Näherungssensor weist eine Sensorvorrichtung des oben beschriebenen Typs auf.

Dem beschriebenen Näherungssensor liegt die Erkenntnis zugrunde, dass sich die oben beschriebene optische Sensorvorrichtung in besonderer Weise dafür eignet, das Eindringen von Objekten in den Erfassungsbereich zu detektieren.

Im Bereich der Haustechnik kann der Näherungssensor beispielsweise dafür verwendet werden, eine automatische Türöffnung und/oder Türschließung zu veranlassen, wenn eine Person in einem Raum gehen oder wenn die Türe des Raumes wieder geschlossen werden soll. In diesem Fall wird der Näherungssensor derart ausgebildet und angeordnet, dass sich der Erfassungsbereich vor der betreffenden Tür befindet.

Es wird darauf hingewiesen, dass insbesondere im Bereich der Haustechnik der Näherungssensor auch häufig als Annäherungssensor, Näherungsmelder und/oder Annäherungsmelder bezeichnet wird.

Der Näherungssensor kann auch ein sog. Intrusionsmelder sein, der ein unerwünschtes Eindringen einer unbefugten Person und/oder eines Objekts in einen überwachten Bereich detektiert. In diesem Fall kann die verwendete Sensorvorrichtung auch nach dem Prinzip der Reflexlichtschranke arbeiten. So kann der Näherungssensor in einem Behälter wie beispielsweise einem Schaukasten angeordnet sein und ein unbefugtes Entfernen eines in dem Schaukasten befindlichen Gegenstandes anzeigen. Störende Reflexionen beispielsweise durch eine gegenüberliegende Glasscheibe werden durch die erfindungsgemäße Differenzbildung automatisch zumindest erheblich reduziert.

Gemäß einem weiteren Aspekt der Erfindung wird ein Gefahrenmelder zum Erkennen einer Gefahrensituation beschrieben, welcher insbesondere zum Detektieren von Rauch in einem überwachten Rauch geeignet ist. Der beschriebene Gefahrenmelder weist eine Sensorvorrichtung des oben beschriebenen Typs auf.

Auch dem beschriebenen Gefahrenmelder liegt die Erkenntnis zugrunde, dass sich die oben beschriebene optische Sensorvorrichtung in besonderer Weise dafür eignet, eine Gefahrensituation zuverlässig zu erkennen.

Der beschriebene Gefahrenmelder kann somit auch ein Brandmelder sein, welcher in einem Brandfall eine Rauchgasentwicklung erfasst. In diesem Fall handelt es sich bei dem beschriebenen Objekt um Rauch bzw. um einzelne Aerosole oder Rauchpartikel. Selbstverständlich kann der Gefahrenmelder auch die Entstehung von Rauch unabhängig von einem Brandfall erkennen. Zur Rauchdetektion kann der Gefahrenmelder auf das bekannte Streulichtprinzip zurückgreifen.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Figur 1 zeigt gemäß einem ersten Ausführungsbeispiel der Erfindung eine Sensorvorrichtung mit zwei als Fotodioden ausgebildeten Empfangseinrichtungen, die zueinander mit umgekehrter Polarität parallel geschaltet sind, bei der Erfassung eines vergleichsweise nahen streuenden Objekts.

Figur 2 zeigt die bereits in Figur 1 dargestellte Sensorvorrichtung bei der Erfassung eines vergleichsweise fernen reflektierenden Gegenstandes.

Figur 3 zeigt eine experimentell gemessene Abhängigkeit eines gemessenen Differenzsignals von dem Abstand eines bestimmten Objekts von der Sensorvorrichtung.

Figur 4 zeigt den zeitlichen Verlauf einiger Spannungen und Ströme bei der in den Figuren 1 und 2 dargestellten Sensorvorrichtung.

Figur 5 zeigt gemäß einem zweiten Ausführungsbeispiel der Erfindung eine Sensorvorrichtung mit zwei Schaltelementen, wobei durch eine Öffnung eines Schaltelements jeweils eine Sendeeinrichtung gezielt deaktivierbar ist.

Figur 6 zeigt den zeitlichen Verlauf einiger Spannungen und Ströme bei der in der Figur 5 dargestellten Sensorvorrichtung.

Figur 7 zeigt die bereits in den Figuren 1 und 2 dargestellte Sensorvorrichtung bei der Erfassung eines fernen und stark leuchtenden Gegenstandes.

Figur 8 zeigt gemäß einem dritten Ausführungsbeispiel der Erfindung eine Sensorvorrichtung mit zwei verstellbaren Abgleichelementen zum Abgleichen des Differenzsignals auf einen vorbestimmten Wert.

Figur 9 zeigt in einer schematischen Querschnittsdarstellung einen Rauchmelder mit zwei Reflexionslichtschranken, die an einer gemeinsamen Leiterplatte angebracht sind.

Figur 10 zeigt eine Subtraktionseinheit zur Bildung eines Differenzsignals zwischen zwei Ausgangssignalen von den in Figur 9 dargestellten Lichtschranken.

Figur 11 illustriert eine zeitliche Verbreiterung oder Strukturierung eines Lichtpulses infolge der Streuung an zwei Gegenständen, die unterschiedlich weit von dem Rauchmelder beabstandet sind.

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, mit den gleichen Bezugszeichen versehen sind. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

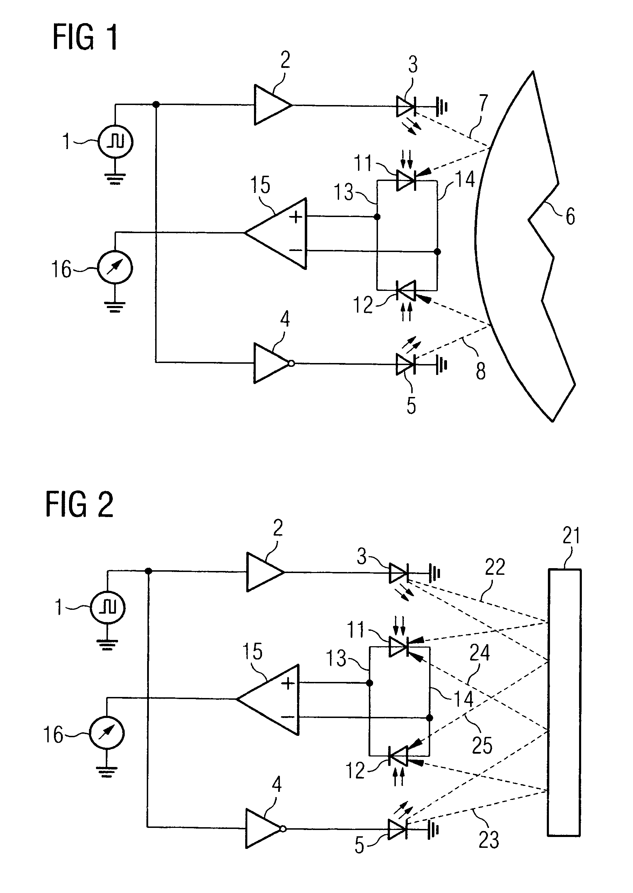

Figur 1 zeigt ein erstes Ausführungsbeispiel einer Sensorvorrichtung. Die Sensorvorrichtung weist eine Signalquelle 1 auf. Gemäß dem hier dargestellten Ausführungsbeispiel ist die Signalquelle ein Funktionsgenerator 1, welcher eine Rechteckspannung ausgibt. Wenn eine Rechteckspannung einer bestimmten Frequenz verwendet wird, dann kann die Schaltung der Sensorvorrichtung in besonders einfacher Weise aufgebaut werden. Es ist aber grundsätzlich auch möglich, eine Spannung beliebiger Art, auch mit einem nicht periodischen Zeitverlauf zu verwenden.

Die Spannung der Signalquelle 1 wird einem nicht-invertierenden Verstärker 2 zugeführt und dort soweit verstärkt, dass das Ausgangssignal des Verstärkers 2 in der Lage ist, eine erste optische Sendeeinrichtung 3 mit einem Strom zu versorgen der für den ordnungsgemäßen Betrieb der optischen Sendeeinrichtung 3 genügend groß ist. Gemäß dem hier dargestellten Ausführungsbeispiel ist die erste optische Sendeeinrichtung eine erste Leuchtdiode 3.

Die Spannung der Signalquelle 1 wird ebenfalls einem invertierenden Verstärker 4 zugeführt und dort soweit verstärkt dass das Ausgangssignal des Verstärkers 3 in der Lage ist, eine zweite optische Sendeeinrichtung 5 mit einem Strom zu versorgen, der für den ordnungsgemäßen Betrieb der Sendeeinrichtung 5 genügend groß ist. Gemäß dem hier dargestellten Ausführungsbeispiel ist die zweite optische Sendeeinrichtung eine zweite Leuchtdiode 5.

Infolge der Verwendung des invertierenden Verstärkers 4 und des nicht-invertierenden Verstärkers 2 ist der Stromfluss durch die erste Leuchtdiode 3 und damit auch das von der ersten Leuchtdiode 3 ausgesendete erste Sendelicht 7 zeitlich gegenphasig zu dem Strom durch die zweite Leuchtdiode 5 und damit auch zu dem von der zweiten Leuchtdiode 5 ausgesendeten Sendelicht 8. Dies bedeutet: Da die Leuchtdioden 3, 5 nur dann Licht 7, 8 emittieren, wenn sie in Durchlassrichtung bestromt werden, wird in einer ersten Phase die erste Leuchtdiode 3 das Licht 7 emittieren und die zweite Leuchtdiode 5 ausgeschaltet sein. In entsprechender Weise wird in einer zweiten Phase die zweite Leuchtdiode 5 das Licht 8 emittieren und die erste Leuchtdiode 3 wird ausgeschaltet sein.

Falls im aktiven Volumen der Sensorvorrichtung, welches in diesem Dokument auch als Erfassungsbereich der Sensorvorrichtung bezeichnet wird, ein zu erfassendes Objekt 6 vorhanden ist, wird das Licht, welches von den beiden Leuchtdioden 3 und 5 ausgesendet wird, reflektiert oder gestreut. Das Objekt 6 kann beispielsweise eine Person sein, die in einen noch durch eine Tür verschlossenen Raum Einlass begehrt. Ebenso könnte das Objekt 6 jedoch auch ein Einbrecher oder auch ein Einbruchswerkzeug eines Einbrechers sein.

Wie aus Figur 1 ersichtlich, gelangt das Licht 7 von der ersten Leuchtdiode 3 vorzugsweise in die erste optische Empfangseinrichtung 11 und das Licht 8 gelangt von der zweiten Leuchtdiode 5 vorzugsweise in die zweite optische Empfangseinrichtung 12. Gemäß dem hier dargestellten Ausführungsbeispiel ist die erste optische Empfangseinrichtung eine erste Fotodiode 11 und die zweite optische Empfangseinrichtung ist eine zweite Fotodiode 12.

Es wird darauf hingewiesen, dass es jedoch keineswegs zwingend erforderlich ist, dass die beiden optischen Strecken zwischen der ersten Leuchtdiode 3 und der ersten Empfangseinrichtung 11 sowie zwischen dem zweiten Leuchtdiode 5 und der zweiten Empfangseinrichtung 12 vollständig voneinander getrennt sind.

Gemäß dem hier dargestellten Ausführungsbeispiel ist die erste Fotodiode 11 mit der zweiten Fotodiode 12 über elektrische Leitungen 13 und 14 antiparallel geschaltet. Dies hat zur Folge, dass der Strom der von diesen beiden Leitungen abgenommen werden kann, genau der Differenz der Ströme entspricht, die in den beiden einzelnen Fotodioden 11 und 12 bei der Detektion des von dem Objekt 6 zurückgestreuten Lichts entstehen.

Die beiden Leitungen 13 und 14 sind an die Eingänge eines Differenzverstärkers 15 geschaltet, der somit ein Abbild des Stromes zwischen den beiden Leitungen 13 und 14 erzeugt. Das Abbild kann proportional zum Differenzstrom sein. Es kann aber beispielsweise auch ein logarithmischer Verstärker verwendet werden wenn die Sensorvorrichtung beispielsweise einen besonders großen Dynamikbereich aufweisen soll. Der Differenzverstärker 15 ist vorzugsweise ein sog. Transimpedanzverstärker mit einer kleinen Eingangsimpedanz, welcher an seinem Ausgang eine Spannung erzeugt, die proportional zum Wert der Transimpedanz und ebenfalls proportional zum Strom zwischen den beiden Leitungen 13 und 14 und damit zur Differenz der Ströme in den Fotodioden 11 und 12 ist. Die Verwendung eines Transimpedanzverstärkers hat zur Folge, dass der Einfluss der Kapazitäten der Fotodioden 11, 12 und/oder der Verbindungsleitungen 13, 14 weitgehend unwirksam gemacht werden kann. Es ist aber auch möglich eine beliebige andere Art von Differenzverstärker zu verwenden wenn der Einfluss der parasitären Kapazitäten insbesondere von den Fotodioden 11, 12 und den Leitungen 13, 14 in der weiteren Signalverarbeitung nicht zu groß wird.

Das Ausgangssignal des Differenzverstärkers 15 wird einer Auswerteeinheit 16 zugeführt, welche in Figur 1 vereinfachend als Messgerät gezeichnet ist. Die Auswerteeinheit 16 hat die Aufgabe, basierend auf dem eingehenden Signal, welches von dem Differenzverstärker ausgegeben wird, zu ermitteln, ob ein zu erfassendes Objekt in dem Erfassungsbereich vorhanden ist. Falls dies der Fall ist, dann veranlasst die Auswerteeinheit 16 eine entsprechende Meldung.

Falls nur das Objekt 6 erkannt werden muss und keine weiteren Anforderungen an die Signalauswertung der Sensorvorrichtung gestellt werden, dann ist die Wirkungsweise der Sensorvorrichtung mit derjenigen einer gewöhnlichen Reflexlichtschranke sehr ähnlich. Für die einfache Erkennung des Objekts 6 ergeben sich dann noch keine wesentlichen Vorteile. Falls jedoch Störeinflüsse vorhanden sind, was in der Praxis häufig der Fall ist, dann ergeben sich durch die beschriebene Schaltungsanordnung und insbesondere durch die direkte Verarbeitung des Differenzsignals zwischen beiden Fotodioden 11 und 12 besondere Vorteile.

Es kann nämlich beispielsweise vorkommen, dass die Fotodioden 11 und/oder 12 Licht von einem weiter entfernten Gegenstand empfangen, der sich eigentlich außerhalb des üblichen Erfassungsbereiches befindet und der für die Sensorvorrichtung eigentlich nicht von Bedeutung sein sollte. Dies ist in Figur 2 schematisch dargestellt.

Figur 2 zeigt die bereits in Figur 1 dargestellte Sensorvorrichtung bei der Erfassung eines vergleichsweise fernen reflektierenden Gegenstandes 21. Infolge des hohen Reflexionsvermögens des Gegenstandes 21, welches beispielsweise die Glasscheibe eines Schaukastens sein kann, trifft ein bedeutender Anteil an Licht auf die Fotodioden 11 und 12. Insbesondere gelangt Licht von der ersten Leuchtdiode 3 über den Strahlengang 22 in die erste Fotodiode 11. Ebenso gelangt Licht von der zweiten Leuchtdiode 5 über den Strahlengang 23 in die zweite Fotodiode 12, ähnlich wie dies bereits in Figur 1 gezeigt wurde.

Zusätzlich gelangt jedoch auch noch Licht von der ersten Leuchtdiode 3 über den Strahlengang 25 in die zweite Fotodiode 12 und Licht von der zweiten Leuchtdiode 5 gelangt über den Strahlengang 24 in die erste Fotodiode 11. Vorzugsweise senden die erste Leuchtdiode 3 und die zweite Leuchtdiode 5 zumindest näherungsweise und im zeitlichen Mittelwert gleichviel Licht aus, so dass die optische Strecke von der ersten Leuchtdiode 3 zu der ersten Fotodiode 11 zumindest näherungsweise die gleichen Eigenschaften hat wie die optische Strecke von der zweiten Leuchtdiode 5 zu der zweiten Fotodiode 12. Ferner sollte die erste Fotodiode 11 zumindest näherungsweise dieselbe Wandlerkonstante, d.h. die gleiche Effektivität bzgl. der Lichtdetektion wie die zweite Fotodiode 12 haben. Falls der Gegenstand 21 homogen und genügend groß ist, dann wird in der ersten Fotodiode 11 zumindest näherungsweise im zeitlichen Mittel dieselbe Strommenge erzeugt wie in der zweiten Fotodiode 12.

Figur 3 zeigt wie sich das Differenzsignal der in den Figuren 1 und 2 dargestellten Sensorvorrichtung verändert, wenn sich ein bestimmtes Objekt zu der Sensorvorrichtung hin bzw. von dieser weg bewegt. In dem dargestellten Koordinatensystem ist auf der Abszisse der Abstand des Objekts zur Sensorvorrichtung aufgetragen, wobei sich der Nullpunkt am linken Ende der Achse befindet und auch als solcher bezeichnet ist. Die Skalierung ist willkürlich. Auf der Ordinate ist das Differenzsignal aufgetragen, wobei sich ebenfalls der Nullpunkt am unteren Ende der Skala befindet und wiederum entsprechend bezeichnet ist. Auch hier ist die Skalierung willkürlich gewählt.

Aus Figur 3 ist deutlich ersichtlich, dass das Differenzsignal sehr stark ansteigt sobald der Abstand des Objekts zur Sensorvorrichtung eine bestimmte Grenze unterschreitet. Die Sensorvorrichtung eignet sich somit sehr gut als Annäherungsmelder wie er beispielsweise zum selbsttätigen Öffnen von Türen verwendet wird.

Da die Sensorvorrichtung bei weit entfernten Gegenständen nur sehr wenig empfindlich ist, eignet sich die Sensorvorrichtung auch besonders gut als Intrusionsmelder, mit dem beispielsweise wertvolle Gegenstände geschützt werden können, die sich in einem Behältnis wie beispielsweise einem Schaukasten befinden. Eine Sensorvorrichtung in der oben beschriebenen Art wird deshalb von den Wänden und den Glasscheiben des Schaukastens nur wenig beeinflusst.

Die beschriebene Sensorvorrichtung kann jedoch nicht nur verwendet werden um feste Gegenstände festzustellen, sondern sie kann auch Flüssigkeiten, Gase und Aerosole mit bestimmten optischen Eigenschaften, also beispielsweise auch Rauch erkennen. Somit kann das obenstehend beschriebene Funktionsprinzip auch auf einen Rauchmelder angewendet werden.

Figur 4 zeigt den zeitlichen Verlauf einiger Spannungen und Ströme bei der in den Figuren 1 und 2 dargestellten Sensorvorrichtung. Ein erstes Signal 41 entspricht dem zeitlichen Verlauf der Spannung, die von der Signalquelle 1 (siehe Figuren 1 und 2) ausgegeben wird. Das zweite Signal 42 entspricht dem Strom, der durch die erste Leuchtdiode 3 fließt. Das dritte Signal 43 entspricht dem Strom, der durch die zweite Leuchtdiode 5 fließt. Das vierte Signal 44 entspricht dem Strom, der von der ersten Fotodiode 11 als Folge einer Lichtdetektion erzeugt wird. Das fünfte Signal 45 entspricht dem Strom, der von der zweiten Fotodiode 12 als Folge einer Lichtdetektion erzeugt wird. Die Größe der von den Fotodioden 11 und 12 erzeugten Ströme hängt von der Menge des von den Leuchtdioden 3 und 5 ausgesendeten Lichts sowie von der Größe und dem Reflexionsverhalten des zu erkennenden Objekts ab. In Figur 4 wird dabei angenommen, dass ein so großes Objekt vorhanden ist und somit in den beiden Fotodioden 11 und 12 ein spürbarer Strom entsteht. Allerdings ist dieser Strom jeweils nicht so groß, dass irgendein Bauteil außerhalb seines linearen Arbeitsbereiches betrieben werden würde.

Innerhalb der Zeitspanne, in der durch die erste Leuchtdiode 3 Strom fließt, wird in der ersten Fotodiode 3 ein verhältnismäßig großer Strom fließen. Innerhalb der Zeitspanne, in der in der zweiten Leuchtdiode 5 Strom fließt, wird dagegen in der ersten Fotodiode 3 verhältnismäßig wenig oder gar kein Strom fließen. Dies liegt daran, dass das von der zweiten Leuchtdiode 5 ausgesendete und vom Objekt 6 zurückgestreute Licht, wie bereits oben ausgeführt, vorzugsweise in die zweite Fotodiode 12 und in wesentlich geringerem Ausmaß in die erste Fotodiode 11 gelangt.

In gleicher Weise wird innerhalb der Zeitspanne, in der durch die zweite Leuchtdiode 5 Strom fließt, ein verhältnismäßig großer Strom von der zweiten Fotodiode 12 erzeugt. Innerhalb der Zeitspanne, in der durch die erste Leuchtdiode 3 Strom fließt, wird ein verhältnismäßig kleiner Strom von der zweiten Fotodiode 12 erzeugt.

Das in Figur 4 dargestellte sechste Signal 46 entspricht dem Strom der zwischen den Verbindungsleitungen 13 und 14. Da die beiden Fotodioden 11 und 12 antiparallel geschaltet sind, ist dieser Strom gleich der Differenz der Ströme in den beiden Fotodioden 13 und 14. Dabei wird angenommen, dass diese Differenz positiv ist, wenn der Strom von der ersten Fotodiode 11 größer als der Strom von der zweiten Fotodiode 12. Die Wahl des Vorzeichens ist aber willkürlich und hat auf die Funktion der beschriebenen Sensorvorrichtung keine Bedeutung. Der Strom zwischen den Verbindungsleitungen 13 und 14 ist positiv, wenn Strom durch die erste Leuchtdiode 3 fließt. Dieser Strom ist dagegen mit näherungsweise demselben Betrag negativ, wenn der Strom durch die zweite Leuchtdiode 5 fließt. Somit liegt am Eingang des Differenzverstärkers 15 ein Strom an, der zumindest näherungsweise eine rechteckige Form hat und dessen Gleichstromanteil zumindest näherungsweise Null ist. Dasselbe gilt auch für die Ausgangsspannung des Differenzverstärkers 15, welche der Auswerteeinheit 16 zugeführt wird.

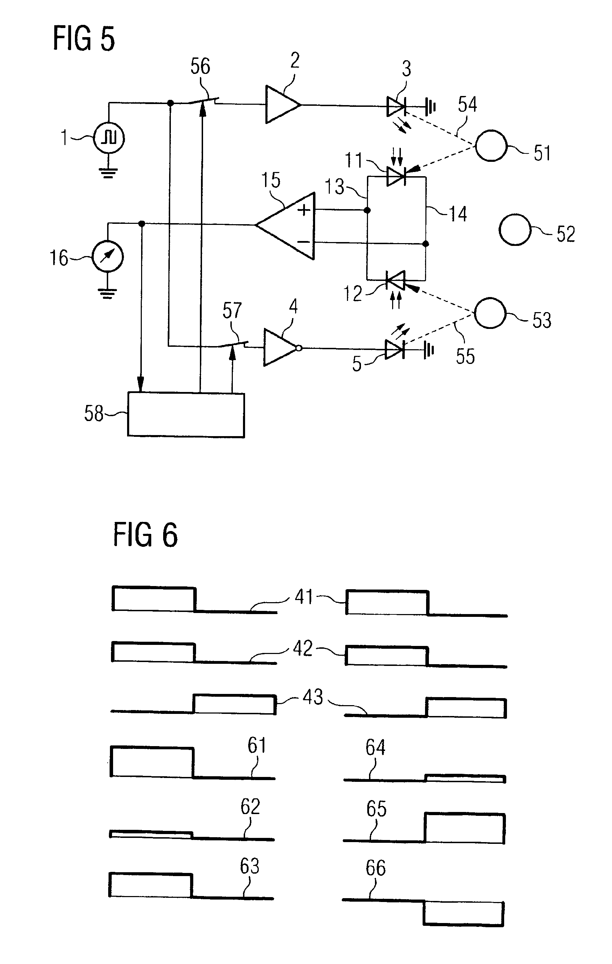

Es kann auch geschehen, dass mehrere kleine Objekte vorhanden sind. Dies wird in Figur 5 gezeigt, in welcher eine Sensorvorrichtung gemäß einem zweiten Ausführungsbeispiel der Erfindung dargestellt ist. Diese Sensorvorrichtung weist im Vergleich zu der in den Figuren 1 und 2 dargestellten Sensorvorrichtung zusätzlich zwei Schaltelemente auf, wobei durch eine Öffnung eines Schaltelements jeweils eine Leuchtdiode gezielt deaktivierbar ist.

Nachfolgend werden verschiedene Fälle beschrieben, wobei sich jeweils ein kleines nicht dargestelltes Objekt an verschiedenen Positionen befindet, welche mit den Bezugzeichen 51, 52 und 53 bezeichnet sind. Selbstverständlich sind diese Positionen 51, 52, 53 nur beispielhaft und das Objekt kann sich auch in einer beliebigen anderen Position befinden. Ebenfalls können auch mehrere kleine Objekte gleichzeitig in dem Erfassungsbereich der Sensorvorrichtung vorhanden sein.

Falls sich ein kleines Objekt in der Position 51 befindet, dann gelangt Licht von der ersten Leuchtdiode 3 entlang des Strahlengangs 54 in die erste Fotodiode 11. Dagegen gelangt von dem Licht, das von der zweiten Leuchtdiode 5 ausgesendet wird, nichts oder nur ein sehr geringer Anteil in die zweite Fotodiode 12.

Die Signale, die in der Folge in der Sensorvorrichtung entstehen, sind in der Figur 6 dargestellt. Die Rechteckspannung der Signalquelle 1 ist mit dem Bezugzeichen 41 bezeichnet. Um das Verständnis zu erleichtern, ist dieses Signal zweifach, d.h. in der linken Spalte und in der rechten Spalte von Figur 6, eingezeichnet. Der Strom durch die erste Leuchtdiode 3 entspricht dem Signal 42 und der Strom durch die zweite Leuchtdiode 5 entspricht dem Signal 43. Auch die Signale 42 und 43 sind zweifach eingezeichnet.

Falls sich das kleine Objekt in der Position 51 befindet, dann gelangt verhältnismäßig viel Licht von der ersten Leuchtdiode 3 auf die erste Fotodiode 11, so dass dort ein verhältnismäßig großer Strom entsteht. Dieser Strom ist als Signal 61 bezeichnet wird und verläuft zeitlich in Phase mit dem Strom 42 durch die erste Leuchtdiode 3. In die zweite Fotodiode 12 gelangt dagegen nur wenig Licht, so dass dieser Strom klein ist, wie dies mit dem Signal 62 dargestellt wird. Signal 63 zeigt den gesamten Strom am Eingang des Differenzverstärkers 15. Dieser Strom entspricht der Differenz der Ströme 61 und 62, wobei der erste Strom 61 positiv und der zweite Strom 62 negativ berücksichtigt ist. Der Differenzstrom 63 ist zeitlich in Phase mit dem Strom 42 durch die erste Leuchtdiode 3 und hat einen positiven Gleichstromanteil.

Falls sich ein kleines Objekt in der Position 53 befindet, dann gelangt verhältnismäßig viel Licht von der zweiten Leuchtdiode 5 auf die zweite Fotodiode 12. Von der zweiten Fotodiode 12 wird dann ein verhältnismäßig großer Strom erzeugt, der als Signal 65 bezeichnet ist und in entgegengesetzter Phase zum Strom 42 durch die erste Leuchtdiode ist. In die erste Fotodiode 11 gelangt dagegen nur wenig Licht, so dass der entsprechende Strom klein ist, wie dies mit dem Signal 64 dargestellt ist. Das Signal 66 zeigt den gesamten Strom am Eingang des Differenzverstärkers 15. Dieser Differenzstrom 66 entspricht wiederum der Differenz der Ströme 61 und 62. Der Differenzstrom 66 ist ebenfalls zeitlich in Phase mit dem Strom 43 durch die zweite Leuchtdiode 5, er hat jedoch einen negativen Gleichstromanteil.

Falls ein großes Objekt vorhanden ist, dann wird die Differenz der Ströme von den Fotodioden 11, 12 ebenfalls zeitlich in Phase mit dem Strom 42 durch die erste Leuchtdiode 3 sein. Der Gleichstromanteil ist dagegen verhältnismäßig klein oder verschwindet sogar, wie aus dem Signal 46 (siehe Figur 4) ersichtlich ist.

Ein kleines Objekt in der mittleren Position 52 erzeugt im Wesentlichen kein Ausgangssignal. Dieses Verhalten der Sensorvorrichtung ist nicht nur zulässig sondern auch erwünscht.

Im Allgemeinen gilt, dass das Verhältnis des Gleichstromanteils zu der Amplitude des Differenzsignals einen Hinweis auf die Größe des zu erkennenden Objekts geben kann, wobei insbesondere ausgeschlossen werden kann dass ein einzelnes kleines Objekt ein Signal mit einer großen Amplitude und mit einem kleinen Gleichstromanteil ergibt. Die Geschwindigkeit, mit der sich dieses Verhältnis verändert, kann einen Hinweis auf die Geschwindigkeit des Objekts und das Vorzeichen einen Hinweis auf die Lage des Objekts geben. Die Auswerteeinheit 16 ist somit in der Lage, durch eine Analyse des Ausgangssignals des Verstärkers 15 Rückschlüsse auf ein erkanntes Objekt zu ziehen. Dafür ist es jedoch erforderlich, dass der Verstärker 15 in der Lage sein muss auch Gleichstromsignale zu verstärken.

Rückschlüsse auf die Größe des zu erkennenden Objekts können auch gezogen werden, wenn die Leuchtdioden 3 und 5 einzeln ausgeschaltet werden. Die hierzu benötigten Schaltelemente sind ebenfalls in der Figur 5 gezeigt und mit den Bezugzeichen 56 und 57 versehen. Gemäß dem hier dargestellten und besonders bevorzugten Ausführungsbeispiel ist das erste Schaltelement 56 vorgesehen, um den Signalfluss von der Signalquelle 1 zu der ersten Leuchtdiode 3 zu unterbrechen. Auch wenn das Schaltelement 56 vor dem Verstärker 2 eingezeichnet ist, kann es sich an beliebiger Stelle in dem Signalpfad zwischen der Signalquelle 1 und der ersten Leuchtdiode 3 befinden. In gleicher Weise ist ein zweites Schaltelement 57 vorgesehen, um den Signalfluss von der Signalquelle 1 zum der zweiten Leuchtdiode 5 zu unterbrechen.

Ferner ist eine Steuervorrichtung 58 vorgesehen, welcher auch das Ausgangssignal der Signalquelle 1 zugeführt wird und welche auf Grund der Eigenschaften dieses Ausgangssignal sowie von anderen Eingangsgrößen die Schaltelemente 56 und 57 betätigt. Mittels der Steuervorrichtung 58 können die Schaltzustände der Schaltelementen 56 und 57 somit zyklisch variiert werden, wobei in einem ersten Betriebszustand beide Schaltelemente 56 und 57 geschlossen sind, in einem zweiten Betriebszustand nur das Schaltelement 56 geschlossen ist und in einem dritten Betriebszustand nur das Schaltelement 57 geschlossen ist.

Falls bei geschlossenen Schaltelementen 56 und 57 ein großes Differenzsignal empfangen wird, dann kann es sich entweder um ein großes Objekt oder um ein kleines Objekt vor der ersten Leuchtdiode 3 in der als 51 bezeichneten Position oder um ein kleines Objekt vor der zweiten Leuchtdiode 5 in der als 53 bezeichneten Position handeln. Falls die Größe des Differenzsignals nach dem Öffnen des ersten Schaltelementes 56 auf ungefähr die Hälfte zurückgeht, dann muss es sich um ein großes Objekt handeln. Falls die Größe des Differenzsignals nach dem Öffnen des ersten Schaltelementes 56 vollständig oder weitgehend verschwindet, dann muss es sich um ein kleines Objekt handeln, das sich in der mit 51 bezeichneten Position befindet. Falls das Differenzsignal ungefähr gleich bleibt, dann muss es sich um ein kleines Objekt handeln das sich in der Position 53 befindet.

Mit Hilfe des zweiten Schaltelementes 57 kann in der gleichen Art ebenfalls festgestellt werden, ob es sich um ein großes Objekt, ein kleines Objekt in der Position 51 oder um ein kleines Objekt in der Position 53 handelt.

Da mit Hilfe der beiden Schaltelemente 56 und 57 grundsätzlich dieselbe Information gewonnen wird, ist eine Ausführungsform möglich, in der nur ein Schaltelement vorhanden ist. Da aber die Bereitstellung des zweiten Schaltelements im Allgemeinen keinen großen zusätzlichen apparativen Aufwand zur Folge hat und die Bestimmung der Größe und der Lage des Objekts mit größerer Gewissheit erlaubt, ist die dargestellte Ausführungsform mit zwei Schaltelementen vorzuziehen. Dies gilt auch falls mehr als zwei Leuchtdioden vorhanden sind, wobei dann eine Ausführungsform vorzuziehen ist, in der jede Leuchtdiode einzeln ausgeschaltet werden kann.

Kleine Objekte können beispielsweise Insekten sein. Von Insekten droht keine unmittelbare Gefahr, so dass es nicht nötig ist einen Alarm auszulösen. Insekten stellen aber trotzdem eine Gefahr dar, da sie beispielsweise den in einem Schaukasten gezeigten Inhalt beschädigen können. Somit kann es zweckmäßig sein, auch dann eine Warnung an den Benutzer auszugeben, wenn lediglich kleine Objekte von der Sensorvorrichtung festgestellt werden.

Beim Betrieb eines photoelektrischen Annäherungs- oder Gefahrenmelders besteht die Gefahr, dass Fremdlicht, beispielsweise Sonnenlicht oder das Licht von künstlichen Lichtquellen, in die Fotodiode(n) gelangt. Diese kann (können) dann übersteuert werden und so die Funktion der Sensorvorrichtung beeinträchtigt werden. Selbstverständlich sind dem Fachmann Maßnahmen bekannt, die den Einfluss von Fremdlicht reduzieren können. Solche Maßnahmen umfassen beispielsweise das Anbringen eines geeigneten Filters vor der Fotodiode, so dass nur Licht einer bestimmten und möglichst von der Störquelle verschiedenen Wellenlänge durchgelassen wird. Ferner kann das Messsignal so moduliert werden, dass sich dessen Zeitverhalten möglichst von allem denkbaren Störquellen unterscheidet. Ein Annäherung- oder Gefahrenmelder der nach den vorstehenden Prinzipien aufgebaut ist, kann somit eine zusätzliche Unterdrückung von solchen Störungen erreichen, ohne dass hierzu weitere Schaltelemente und/oder Maßnahmen erforderlich sind.

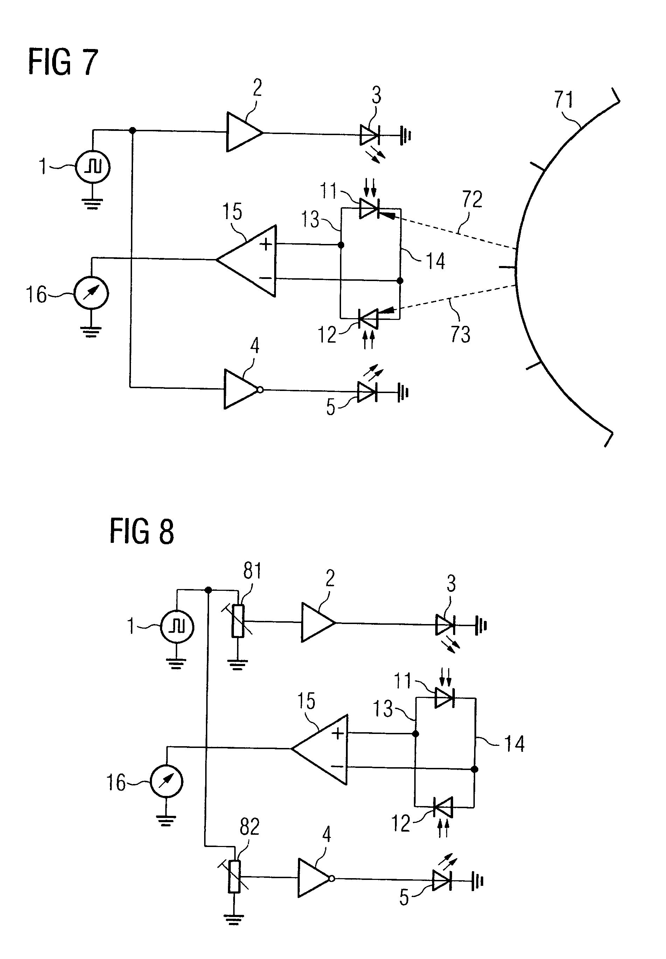

Figur 7 zeigt die bereits in den Figuren 1 und 2 dargestellte Sensorvorrichtung bei der Erfassung eines fernen und stark leuchtenden Gegenstandes 71. Der Gegenstand kann beispielsweise die Sonne sein. Der Gegenstand 71 sendet Strahlen aus, die unter anderem entlang des Strahlengangs 72 in die erste Fotodiode 11 und entlang des Strahlengangs 73 in die zweite Fotodiode 12 gelangen. Wenn der Abstand des strahlenden Gegenstandes 71 von der Sensorvorrichtung genügend groß ist und die Abstrahlungscharakteristik genügend homogen ist, dann wird die Energie, die entlang der beiden Strahlengänge 72 und 73 in die beiden Fotodioden 11 und 12 gelangt, weitgehend gleich sein. Somit ist auch der Ausgangsstrom der beiden Fotodioden 11 und 12 weitgehend gleich. Weil die beiden Fotodioden 11 und 12 über die Verbindungsleitungen 13 und 14 antiparallel geschaltet sind, heben sich deren Einzelströme weitgehend gegenseitig auf, so dass im Eingang des Differenzverstärkers 15 nur wenig Strom fließt und am Ausgang dieses Verstärkers 15 nur eine kleine Spannung entsteht.

Es ist besonders zweckmäßig jeweils zumindest eine PIN-Diode 12 für die Fotodiode 11 und/oder für die Fotodiode 12 zu verwenden. PIN-Dioden sind nämlich besonders niederohmig und können auch große Ströme, die von starken Signalquellen verursacht werden, ohne Schwierigkeiten verarbeiten.

In gewissen Anwendungsfällen kann es erwünscht sein dass der Differenzstrom im Ruhezustand auf Null abgeglichen werden kann. Das ist insbesondere dann der Fall wenn die Sensorvorrichtung ganz besonders empfindlich auf eindringende Gegenstände reagieren soll.

Figur 8 zeigt gemäß einem dritten Ausführungsbeispiel der Erfindung eine Sensorvorrichtung mit zwei verstellbaren Abgleichelementen 81 und 82 zum Abgleichen des Differenzsignals auf einen vorbestimmten Wert. Das Abgleichelement 81 befindet sich im Signalpfad von der Signalquelle 1 zur ersten Leuchtdiode 3 vor dem nicht-invertierenden Verstärker 2. Das Abgleichelement 82 befindet sich im Signalpfad von der Signalquelle 1 zu der zweiten Leuchtdiode 5 vor dem invertierenden Verstärker 4. Diese Abgleichelemente 81 und 82 können mit Hilfe eines geeigneten Algorithmus so abgeglichen werden, dass der Differenzstrom am Eingang des Verstärkers 15 im Ruhezustand Null ist oder einen anderen gewünschten Wert annimmt.

Es wird darauf hingewiesen, dass es ist keineswegs nötig ist, dass beide Abgleichelemente 81 und 82 vorhanden sind. Es genügt vielmehr, wenn in einem der Signalpfade von der Signalquelle 1 zu der ersten Leuchtdiode 3 oder von der Signalquelle 1 zu der zweiten Leuchtdiode 5 ein Abgleichelement vorhanden ist. Es ist auch keineswegs erforderlich, dass das Abgleichelement an der eingezeichneten Stelle angeordnet ist. Das Abgleichelement kann an beliebiger Stelle zwischen der Signalquelle 1 und der ersten Leuchtdiode 3 beziehungsweise der zweiten Leuchtdiode 5 angeordnet sein. Die in Figur 8 dargestellte Ausführungsform hat jedoch schaltungstechnische Vorteile, indem (a) die Abgleichelemente 81 und 82 so aufgebaut sein können, dass sie nur abschwächen müssen und nicht verstärken müssen, und indem (b) die Abgleichelemente 81 und 82 an einer Stelle eingebaut sind, an der die Leistung des Signals klein ist, so dass diese Schaltung einfach und kostensparend realisiert werden kann.

Es wird ferner darauf hingewiesen, dass auch ein Abgleich im Empfangspfad zwischen den beiden Fotodioden 11 und 12 und dem Verstärker 15 ebenfalls möglich ist.

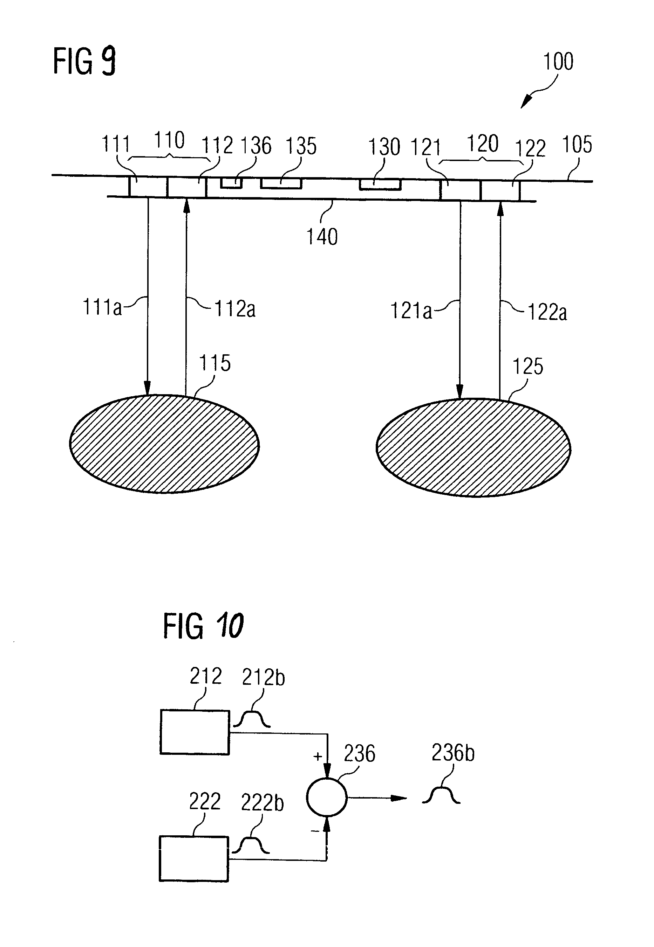

Figur 9 zeigt einen Rauchmelder 100, welcher eine Grundplatte 105 aufweist. Gemäß dem hier dargestellten Ausführungsbeispiel ist die Grundplatte eine Leiterplatte 105 oder ein geeigneter Schaltungsträger zum Aufnehmen von elektronischen und optoelektronischen Bauelementen. Sämtliche an der Leiterplatte 105 angebrachten Bauelemente sind in nicht dargestellter Weise mittels Leiterbahnen oder elektrischen Drahtverbindungen in geeigneter Weise kontaktiert.

Der Rauchmelder 100 umfasst eine erste Reflexionslichtschranke 110 und eine zweite Reflexionslichtschranke 120. Die erste Reflexionslichtschranke 110 weist einen ersten Lichtsender 111 und unmittelbar daneben in einem gemeinsamen Gehäuse angeordnet einen ersten Lichtempfänger 112 auf. Die zweite Reflexionslichtschranke 120 weist einen zweiten Lichtsender 121 und unmittelbar daneben in einem gemeinsamen Gehäuse angeordnet einen zweiten Lichtempfänger 122 auf.

Der erste Lichtsender 111 sendet im Wesentlichen senkrecht zu der Ebene der Leiterplatte 105 ein erstes Beleuchtungslicht 111a aus. Das erste Beleuchtungslicht 111a wird in einem ersten Detektionsraum 115, in dem sich beispielsweise Rauch befindet, zumindest teilweise um annähernd 180° zurückgestreut. Das zurück gestreute Licht erreicht als erstes Messlicht 112a den ersten Lichtempfänger 112.

In entsprechender Weise sendet der zweite Lichtsender 121 im Wesentlichen senkrecht zu der Ebene der Leiterplatte 105 ein zweites Beleuchtungslicht 121a aus. Das zweite Beleuchtungslicht 121a wird in einem zweiten Detektionsraum 125, in dem sich beispielsweise Rauch befindet, zumindest teilweise um annähernd 180° zurückgestreut. Das zurück gestreute Licht erreicht als zweites Messlicht 122a den zweiten Lichtempfänger 122.

Der Rauchmelder 100 weist ferner eine Subtraktionseinheit 136 auf, welche aus den Ausgangssignalen der beiden Lichtempfänger 112 und 122 ein Differenzsignal bildet. Dieses Differenzsignal wird einer Datenverarbeitungseinrichtung 135 des Rauchmelders 100 zugeführt.

Ferner ist eine Steuereinrichtung 130 vorgesehen, welche mit den beiden Lichtsendern 111 und 121 gekoppelt ist. Dadurch können die beiden Lichtsender 111 und 121 unabhängig voneinander aktiviert bzw. eingeschaltet werden.

Sämtliche Komponenten 110, 120, 130, 135 und 136 des Rauchmelders 100 sind an der Leiterplatte 105 angebracht und in geeigneter Weise elektrisch kontaktiert. Dadurch kann der Rauchmelder 100 in einer sehr flachen Bauweise realisiert werden. Die Höhe des Rauchmelders 100 ist dabei lediglich durch die Dicke der Leiterplatte 105 und durch die Komponenten 110, 120, 130, 135 und 136 bestimmt.

Gemäß dem hier dargestellten Ausführungsbeispiel sind sämtliche Komponenten 110, 120, 130, 135 und 136 sog. Surface Mount Technology (SMD) Bauteile. Dadurch kann beispielsweise eine Gesamthöhe von lediglich 2,1 mm erreicht werden. Die Gesamthöhe ergibt sich dabei durch den Abstand zwischen der Oberseite der Leiterplatte 105 und der in Figur 1 mit dem Bezugszeichen 140 versehenen unteren Oberfläche des Rauchmelders.

Gemäß dem hier dargestellten Ausführungsbeispiel fallen die lichtaktiven Flächen der Lichtsender 111, 121 und der Lichtempfänger 112, 122 mit der Oberfläche 140 zusammen. Dies bedeutet, dass sich zwischen diesen lichtaktiven Flächen und dem jeweiligen Detektionsraum 115, 125 keine weiteren Teile des Rauchmelders 100 befinden. Dies gilt auch für Abdeckungen oder Gehäuseteile. Derartige Abdeckungen, welche bei bekannten Rauchmeldern häufig zur Zwecke einer Schmutzabweisung vorgesehen sind, sind jedoch bei vielen Anwendungen insbesondere im Heimbereich auch gar nicht erforderlich. Außerdem können auch Lichtschranken verwendet werden, welche für die lichtaktiven Flächen der Lichtsender 111, 121 und der Lichtempfänger 112, 122 bereits transparente Schutzschichten aufweisen, so dass dadurch zumindest ein gewisser Verschmutzungsschutz gegeben ist.

Der beschriebene Rauchmelder 100 mit zwei zueinander parallel ausgerichteten Reflexionslichtschranken hat den Vorteil, dass er keine optischen Elemente wie beispielsweise Linsen oder Spiegel aufweist. Dadurch kann der Rauchmelder auf besonders einfache Weise mit preiswerten Komponenten hergestellt werden. Beim Zusammenbau bzw. bei der Montage des Rauchmelders sind auch keine besonderen Montagetoleranzen zu beachten. Alle für den Rauchmelder erforderlichen Komponenten sind Massenware, welche preiswert zu beschaffen sind.

Es wird darauf hingewiesen, dass durch die parallelen Lichtstrahlen 111a, 112a, 121a, 122a prinzipiell die Gefahr besteht, dass weit entfernte feste Objekte als Rauch interpretiert werden könnten. Ein versehentlich in der Nähe des Rauchmelders 100 in den Detektionsraum gebrachtes gegenständliches Objekt kann anhand des sehr starken Rückstreusignals gut von einem Rauchsignal unterschieden werden. Weit entfernte Streuobjekte, die sich im Blickfeld des Rauchmelders befinden, liefern aufgrund ihrer meist diffusen Rückstreuung jedoch nur ein schwaches Signal und sind mit obigem Kriterium häufig nicht mehr zuverlässig von Rauch unterscheidbar.

Eine zuverlässige Unterscheidbarkeit zwischen Rauch und weit entfernten gegenständlichen Streuobjekten kann mit dem beschriebenen Rauchmelder 100 jedoch auf wirksame

Weise dadurch erfolgen, dass beispielsweise während des Aussendens des Beleuchtungslichts 110a durch den aktivierten Lichtsender 111 der andere Lichtsender 121 ab geschalten bzw. deaktiviert wird. Gleichzeitig sind beide Lichtempfänger 112 und 122 aktiviert. Zeigen in diesem Fall beide Lichtempfänger 112 und 122 zumindest annähernd das gleiche Signal, dann handelt es sich um ein fernes Echo von einem Gegenstand, der sich außerhalb des Detektionsraumes in dem Blickfeld des Rauchmelders befindet. Dieses Echo kann beispielsweise von einer Bodenfläche der von dem Rauchmelder 100 überwachten Raumes und nicht von Rauchpartikeln stammen. Rauchpartikel würde sich nämlich insbesondere bei einer Deckenmontage des Rauchmelders 100 zumindest teilweise auch in der Nähe des Rauchmelders 100 befinden, so dass in diesem Fall die Signale der beiden Lichtempfänger 112 und 122 unterschiedlich stark wären.

Zur Detektion von Rauch kann auch einfach das Differenzsignal zwischen den beiden Lichtempfängern 112 und 122 ausgewertet werden. Dabei kann auch effektiv der Einfluss von Fremdlicht unterdrückt werden.

Figur 10 zeigt die bereits in Figur 9 dargestellte Subtraktionseinheit, welche nunmehr mit dem Bezugszeichen 236 versehen ist. Einem "Plus-Eingang" der Subtraktionseinheit 236 wird ein erstes Ausgangssignal 212b des ersten Lichtempfängers zugeführt, welcher in Figur 10 mit dem Bezugszeichen 212 versehen ist. Einem "Minus-Eingang" der Subtraktionseinheit 236 wird ein zweites Ausgangssignal 222b des zweiten Lichtempfängers zugeführt, welcher in Figur 10 mit dem Bezugszeichen 222 versehen ist. Aus den beiden Ausgangssignalen 212b und 222b wird ein Differenzsignal 236b gebildet, welches einer in Figur 10 nicht dargestellten Datenverarbeitungseinrichtung zugeführt wird. Das Differenzsignal 236b kann in der Datenverarbeitungseinrichtung wie oben beschrieben ausgewertet werden.

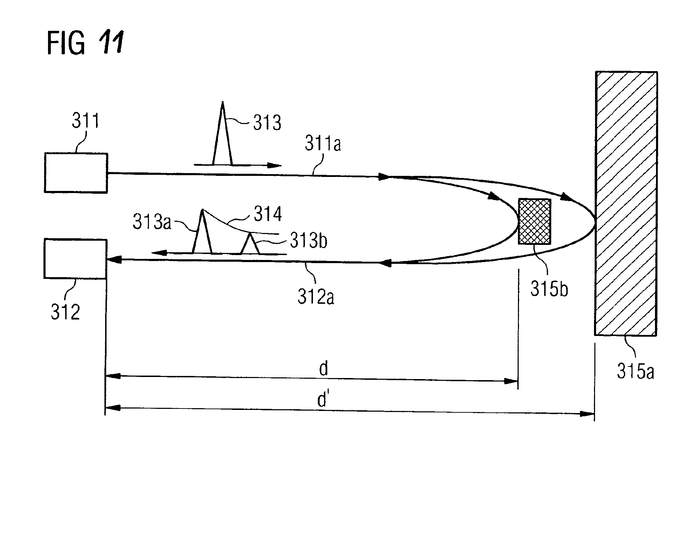

Figur 11 illustriert in einer schematischen Darstellung die zeitliche Verbreiterung oder Strukturierung eines Lichtpulses infolge der Streuung an verschiedenen räumlich verteilten Gegenständen 315a und 315b. Bei den Gegenständen 315a und 315b handelt es sich ausdrücklich nicht um Rauch. Aus dem Grad der zeitlichen Verbreiterung oder der zeitlichen Strukturierung können Rückschlüsse über räumliche Verteilung der gegenständlichen Streuobjekte 315a und 315b gewonnen werden.

Wie aus Figur 11 ersichtlich, sendet ein Lichtsender 311 ein Beleuchtungslicht 311a aus, welches zumindest einen kurzen Lichtpuls 313 aufweist. Dieser Lichtpuls 313 wird dann an den im Blickfeld des Melders befindlichen Gegenständen 315a und 315b um ungefähr 180 Grad zurückgestreut. Dabei tritt die Rückstreuung an allen möglichen Gegenständen innerhalb des Blickfelds des Melders 311, 312 auf. Aus Gründen der Übersichtlichkeit werden bei der Illustration in Figur 11 jedoch nur zwei Gegenstände berücksichtigt. Ein exemplarischer Gegenstand 315b befindet sich in einem Abstand d von dem Lichtsender 311, der andere exemplarische Gegenstand 315a befindet sich in einem Abstand d' von dem Lichtsender 311. Gemäß dem hier dargestellten Ausführungsbeispiel handelt es sich bei dem Gegenstand 315a um den Boden eines überwachten Raumes. Bei dem Gegenstand 315b kann es sich um einen beliebigen Gegenstand wie beispielsweise ein Möbelstück handeln, welches sich permanent oder zeitweise zwischen dem Boden 315a und dem Rauchmelder 311, 312 befindet.

Der Lichtpuls 313 trifft zunächst auf den zweiten Gegenstand 315b im Abstand d von dem Lichtsender. Dabei wird ein Teil der Lichtenergie zurückgestreut, so dass das Messlicht 312a, welches auf den Lichtempfänger 312 trifft, einen ersten Rückstreupuls 313a aufweist. Danach trifft der inzwischen etwas abgeschwächte Lichtpuls 313 auf den ersten Gegenstand bzw. den Boden 315a, welcher sich im Abstand d' von dem Lichtsender befindet. Auch an dem Boden 315a wird wieder ein Teil der Lichtenergie zurück gestreut, so dass das Messlicht 312a einen zweiten Rückstreupuls 313b aufweist.

Bei einer Berücksichtigung sämtlicher in Frage kommender Gegenstände ergibt sich somit eine Überlagerung einer Vielzahl von einzelnen Rückstreupulsen, wobei der resultierende Gesamtrückstreupuls im Vergleich zu dem Eingangslichtpuls 313 erheblich verbreitert ist. Aufgrund der Absorption durch sich evtl. im Blickfeld des Melders befindlichen Rauch kann dabei die Intensität der späteren Rückstreupulse im Vergleich zu den früher auf den Lichtempfänger 312 auftreffenden Rückstreupulsen reduziert sein. Daraus ergibt sich eine asymmetrische Form bzw. ein asymmetrischer zeitlicher Verlauf des Gesamtrückstreupulses, welcher in Figur 11 mit dem Bezugszeichen 314 versehen ist.

In diesem Zusammenhang wird darauf hingewiesen, dass sich evtl. im Blickfeld des Melders befindlicher Rauch, der sich in einem Abstand von typischerweise mehr als einige Zentimeter von dem Rauchmelder 311, 312 befindet, keinen nennenswerten Beitrag zu dem empfangenen optischen Rückstreusignal liefert.

Um den oben beschriebenen Effekt der Verbreiterung oder Strukturierung des Rückstreusignals zu erfassen, kann deshalb für eine intelligente Rauchdetektion nicht nur der Betrag bzw. die Stärke der Rückstreuung sondern auch der zeitliche Verlauf des entsprechenden gepulsten Rückstreusignals ausgewertet werden. Wie bereits oben angedeutet, kann dabei jeder Eingangslichtpuls 313 eine Mehrzahl von Rückstreuimpulsen 313a, 313b, ..., erzeugen, welche von den räumlich verteilten Gegenständen 315a, 315b herstammen.

Je weiter ein Gegenstand entfernt ist, desto mehr wird der hinlaufende Lichtstrahl 311a durch Streuung und Absorption von ggf. in der Raumluft enthaltenen Rauchpartikel gedämpft. Das Gleiche passiert mit dem zurück gestreuten Messlicht 312a. Das Echo der weiter entfernten Gegenstände trifft aber auch später beim Lichtempfänger 312 ein. Anhand des zeitlichen Verlaufs des empfangenen Lichtimpulses kann somit die räumliche Verteilung bzw. Anordnung der in dem Blickfeld des Rauchmelders befindlichen Gegenstände bestimmt werden.

Es wird darauf hingewiesen, dass auch die Laufzeit des Lichtpulses vom Aussenden bis zum Empfang des zurück gestreuten Lichtpulses 314 gemessen und daraus die Distanz zwischen dem Lichtsender 311 bzw. dem Lichtempfänger 312 und den Gegenständen 315a und 315b berechnet werden kann.

Bezugszeichenliste

| 1 | Signalquelle / Funktionsgenerator |
|---|---|
| 2 | nicht-invertierender Verstärker |
| 3 | erste optische Sendeeinrichtung / erste Leuchtdiode |
| 4 | invertierender Verstärker |
| 5 | zweite optische Sendeeinrichtung / zweite Leuchtdiode |
| 6 | Objekt |
| 7 | erste Sendestrahlung / erstes Sendelicht |

| | |
|---|---|
| 8 | zweite Sendestrahlung / zweites Sendelicht |
| 11 | erste Empfangseinrichtung / erste Fotodiode |
| 12 | zweite Empfangseinrichtung / zweite Fotodiode |
| 13 | elektrische Leitung |
| 14 | elektrische Leitung |
| 15 | Differenzverstärker |
| 16 | Auswerteinheit |
| 21 | Gegenstand (reflektierend) |
| 22 | Strahlengang |
| 23 | Strahlengang |
| 24 | Strahlengang |
| 25 | Strahlengang |
| 33 | Messkurve |
| 41 | Spannungsverlauf Signalquelle 1 |
| 42 | Stromverlauf durch erste Leuchtdiode 3 |
| 43 | Stromverlauf durch zweite Leuchtdiode 5 |
| 44 | Strom von erster Fotodiode 11 |
| 45 | Strom von zweiter Fotodiode 12 |
| 46 | Differenzstrom |
| 51 | Objektposition |
| 52 | Objektposition |
| 53 | Objektposition |
| 54 | Strahlengang |
| 55 | Strahlengang |
| 56 | Schaltelement |
| 57 | Schaltelement |
| 58 | Steuervorrichtung |
| 61 | Stromsignal von erster Fotodiode 3 |
| 62 | Stromsignal von zweiter Fotodiode 5 |
| 63 | Differenzstrom |
| 64 | Strom von erster Fotodiode 11 |
| 65 | Strom von zweiter Fotodiode 12 |
| 66 | Differenzstrom |
| 71 | Gegenstand (fern und stark leuchtend) / Sonne |
| 72 | Strahlengang |
| 73 | Strahlengang |
| 81 | Abgleichelement |
| 82 | Abgleichelement |
| | |
| 100 | Sensorvorrichtung / Rauchmelder |
| 105 | Grundplatte / Leiterplatte |
| 110 | erste Reflexionslichtschranke |
| 111 | erste Sendeeinrichtung / erster Lichtsender |
| 111a | erste Sendestrahlung / erstes Beleuchtungslicht |
| 112 | erste Empfangseinrichtung / erster Lichtempfänger |
| 112a | erste Empfangsstrahlung / erstes Messlicht |
| 115 | erster Detektionsraum / erstes Streuvolumen |
| 120 | zweite Reflexionslichtschranke |
| 121 | zweite Sendeeinrichtung / zweiter Lichtsender |
| 121a | zweite Sendestrahlung / zweites Beleuchtungslicht |
| 122 | zweite Empfangseinrichtung / zweiter Lichtempfänger |
| 122a | zweite Empfangsstrahlung / zweites Messlicht |
| 125 | zweiter Detektionsraum / zweites Streuvolumen |
| 130 | Steuereinrichtung |
| 135 | Auswerteeinrichtung / Datenverarbeitungseinrichtung |
| 136 | Subtraktionseinheit |
| 140 | Oberfläche |
| | |
| 212 | erste Empfangseinrichtung / erster Lichtempfänger |
| 212b | erstes Ausgangssignal |
| 222 | zweite Empfangseinrichtung / zweiter Lichtempfänger |
| 222b | zweites Ausgangssignal |
| 236 | Subtraktionseinheit |
| 236b | Differenzsignal |
| 311 | Sendeeinrichtung / Lichtsender |
| 311a | Sendestrahlung / Beleuchtungslicht |
| 312 | Empfangseinrichtung / Lichtempfänger |
| 312a | Empfangsstrahlung / Messlicht |
| 313 | Strahlungspuls / Lichtpuls |
| 313a | Rückstreupuls |
| 313b | Rückstreupuls |
| 315a | erster Gegenstand / Boden |
| 315b | zweiter Gegenstand |

**Patentansprüche**

1. Sensorvorrichtung zum optischen Erfassen eines Objektes (6), die Sensorvorrichtung aufweisend

   - eine erste Sendeeinrichtung (3), eingerichtet zum Aussenden einer ersten Sendestrahlung,
   - eine erste Empfangseinrichtung (11), eingerichtet zum Empfangen einer ersten Empfangsstrahlung,
   - eine zweite Empfangseinrichtung (12), eingerichtet zum Empfangen einer zweiten Empfangsstrahlung, und
   - eine Auswerteeinheit (16, 135), welche der ersten Empfangseinrichtung (11) und der zweiten Empfangseinrichtung (12) nachgeschaltet ist,

   wobei die erste Empfangsstrahlung und die zweite Empfangsstrahlung ein Streulicht aufweist, welches im Falle einer zumindest teilweisen Streuung der ersten Sendestrahlung an dem Objekt (6) erzeugt wird, und
   wobei die Sensorvorrichtung eine Subtraktionseinheit (13, 14, 136, 236) aufweist, welche eingangsseitig mit der ersten Empfangseinrichtung (11, 112, 212) und der zweiten Empfangseinrichtung (12, 122, 222) und ausgangsseitig mit der Auswerteeinheit (16, 135) gekoppelt ist, sodass der Auswerteeinheit (16, 135) ein Differenzsignal zugeführt wird.

2. Sensorvorrichtung nach Anspruch 1, wobei die erste Empfangseinrichtung (11) und die zweite Empfangseinrichtung (12) zueinander mit umgekehrter Polarität parallel geschaltet sind.

**3.** Sensorvorrichtung nach Anspruch 1 oder 2, wobei die Auswerteeinheit (16, 135) derart eingerichtet, dass ein Gleichstromanteil des Differenzsignals und ein Wechselstromanteil des Differenzsignals bestimmbar sind.

**4.** Sensorvorrichtung nach einem der vorangehenden Ansprüche, ferner aufweisend

    - eine zweite Sendeeinrichtung (5), eingerichtet zum Aussenden einer zweiten Sendestrahlung, wobei die erste Empfangsstrahlung und die zweite Empfangsstrahlung ein Streulicht aufweist, welches durch eine zumindest teilweise Streuung der zweiten Sendestrahlung an dem Objekt (6) erzeugt wird, und
    - eine Steuereinrichtung (1, 2, 4, 130), welche mit der ersten Sendeeinrichtung (3, 111) und mit der zweiten Sendeeinrichtung (5, 121) gekoppelt ist und welche derart eingerichtet ist, dass die erste Sendeeinrichtung (3, 111) unabhängig von der zweiten Sendeeinrichtung (5, 121) aktivierbar ist.

**5.** Sensorvorrichtung nach einem der vorangehenden Ansprüche, ferner aufweisend ein Schaltelement (56), welches mit der ersten Sendeeinrichtung (3) derart gekoppelt ist, dass die erste Sendeeinrichtung (3) deaktivierbar ist.

**6.** Sensorvorrichtung nach einem der vorangehenden Ansprüche, ferner aufweisend ein Abgleichelement (81), welches in einem Sende-Signalpfad zu der ersten Sendeinrichtung (3) oder in einem Empfangs-Signalpfad von der ersten Empfangseinrichtung (11) angeordnet ist und welches derart variierbar ist, dass das Differenzsignal auf einen vorbestimmten Wert einstellbar ist.

**7.** Sensorvorrichtung nach einem der vorangehenden Ansprüche, wobei die erste Sendeeinrichtung (3), die erste Empfangseinrichtung (11) und die zweite Empfangseinrichtung (12) relativ zueinander derart angeordnet und ausgerichtet sind,

    - dass im Falle einer Streuung der ersten Sendestrahlung an dem Objekt (6) bei einer gegebenen Umgebungsstrahlung das erste Ausgangssignal der ersten Empfangseinrichtung (11) unterschiedlich zum zweiten Ausgangssignal der zweiten Empfangseinrichtung (12) ist, und
    - dass diese Ausgangssignale nach einem Wegbewegen des Objekts (6) von der Sensorvorrichtung bei derselben Umgebungsstrahlung weniger stark unterschiedlich sind.

**8.** Sensorvorrichtung nach einem der vorangehenden Ansprüche, ferner aufweisend ein Grundelement (105) mit einer planen Montagefläche,

    - wobei die erste Sendeeinrichtung, die erste Empfangseinrichtung, eine zum Aussenden einer zweiten Sendestrahlung (121a) eingerichtete zweite Sendeeinrichtung (121) und die zweite Empfangseinrichtung (122) an der Montagefläche angebracht sind,
    - wobei die erste Empfangseinrichtung (112) neben der ersten Sendeeinrichtung (111) angeordnet ist und zum Empfangen der ersten Empfangsstrahlung (112a) eingerichtet ist, welche aus einer Rückstreuung der ersten Sendestrahlung (111a) an einem in einem ersten Detektionsraum (115) befindlichen Messobjekt resultiert, und
    - wobei die zweite Empfangseinrichtung (122) neben der zweiten Sendeeinrichtung (121) angeordnet ist und zum Empfangen der zweiten Empfangsstrahlung (122a) eingerichtet ist, welche aus einer Rückstreuung der zweiten Sendestrahlung (121a) an einem in einem zweiten Detektionsraum (125) befindlichen Messobjekt resultiert.

**9.** Sensorvorrichtung nach einem der vorangehenden Ansprüche, bei der

    - die erste Sendeeinrichtung (111) und die erste Empfangseinrichtung (112) durch eine erste Reflexionslichtschranke (110) und/oder
    - die zweite Sendeeinrichtung (121) und der zweite Empfangseinrichtung (122) durch eine zweite Reflexionslichtschranke (120) realisiert sind.

**10.** Sensorvorrichtung nach einem der vorangehenden Ansprüche, bei der

    - die Richtung der ersten Sendestrahlung (111a) in Bezug zu einer Normalen der Montagefläche in Richtung der ersten Empfangseinrichtung (112) geneigt ist und/oder
    - die Richtung der zweiten Sendestrahlung (121a) in Bezug zu der Normalen der Montagefläche in Richtung der zweiten Empfangseinrichtung (122) geneigt ist.

**11.** Sensorvorrichtung nach einem der vorangehenden Ansprüche, bei der die Richtung der ersten Sendestrahlung (111a) und die Richtung der zweiten Sendestrahlung (121a) parallel zueinander verlaufen.

**12.** Sensorvorrichtung nach einem der vorangehenden Ansprüche, bei der die erste Sendeeinrichtung (111) und die zweite Sendeeinrichtung (121) sowie die erste Empfangseinrichtung (112) und die zweite Empfangseinrichtung (122) jeweils eine äußere Begrenzung der Sensorvorrichtung darstellen.

13. Näherungssensor zum optischen Erfassen der Anwesenheit eines Objektes (6) in einem Erfassungsbereich, der Näherungssensor aufweisend eine Sensorvorrichtung nach einem der Ansprüche 1 bis 12.

14. Gefahrenmelder zum Erkennen einer Gefahrensituation, insbesondere zum Detektieren von Rauch in einem überwachten Rauch, der Gefahrenmelder aufweisend eine Sensorvorrichtung nach einem der Ansprüche 1 bis 12.

**Claims**

1. Sensor apparatus for optically detecting an object (6), said sensor apparatus comprising

   - a first transmitting device (3), configured for transmitting a first transmission radiation,
   - a first receiving device (11), configured for receiving a first reception radiation,
   - a second receiving device (12), configured for receiving a second reception radiation, and
   - an evaluation unit (16) which is connected behind the first receiving device (11) and the second receiving device (12),

   wherein the first reception radiation and the second reception radiation comprises a scattered light, which is produced in the event of at least partial scattering of the first transmission radiation at the object (6), and
   wherein the sensor apparatus comprises a subtraction unit (13, 14, 136, 236) which is coupled to the first receiving device (11, 112, 212) and to the second receiving device (12, 122, 222) on the input side and to the evaluation unit (16, 135) on the output side so that the evaluation unit (16, 135) is supplied with a difference signal.

2. Sensor apparatus according to claim 1, wherein the first receiving device (11) and the second receiving device (12) are wired together in parallel with reversed polarity.

3. Sensor apparatus according to claim 1 or 2, wherein the evaluation unit (16, 135) is configured such that a direct-current part of the difference signal and an alternating-current part of the difference signal can be identified.

4. Sensor apparatus according to one of the preceding claims, additionally comprising

   - a second transmitting device (5), configured for transmitting a second transmission radiation, wherein the first reception radiation and the second reception radiation comprises a scattered light which is produced by at least partial scattering of the second transmission radiation at the object (6), and
   - a control device (1, 2, 4, 130) which is coupled to the first transmitting device (3, 111) and to the second transmitting device (5, 121) and which is configured such that the first transmitting device (3, 111) can be activated independently of the second transmitting device (5, 121).

5. Sensor apparatus according to one of the preceding claims, additionally comprising a switch element (56) which is coupled to the first transmitting device (3) in such a way that the first transmitting device (3) can be deactivated.

6. Sensor apparatus according to one of the preceding claims, additionally comprising a balancing element (81) which is arranged in a transmit-signal path to the first transmitting device (3) or in a receive-signal path from the first receiving device (11), and which can be varied such that the difference signal can be adjusted to a predefined value.

7. Sensor apparatus according to one of the preceding claims,
   wherein the first transmitting device (3), the first receiving device (11) and the second receiving device (12) are arranged and aligned relative to each other in such a way that

   - in the event of scattering of the first transmission radiation at the object (6) for a given environmental radiation, the first output signal of the first receiving device (11) differs from the second output signal of the second receiving device (12), and that
   - these output signals differ less after the object (6) moves away from the sensor apparatus for the same environmental radiation.

8. Sensor apparatus according to one of the preceding claims, additionally comprising a base element (105) with a plane assembly surface,

   - wherein the first transmitting device, the first receiving device, a second transmitting device which is configured for transmitting a second transmission radiation (121a), and the second receiving device (122) are mounted on the assembly surface,
   - wherein the first receiving device (112) is arranged near to the first transmitting device (111) and is configured for receiving the first reception radiation (112a), this resulting from a backscattering of the first transmission radiation (111a) at an object of measurement which is situated in a first detection space (115), and

- wherein the second receiving device (122) is arranged near to the second transmitting device (121) and is configured for receiving the second reception radiation (122a), this resulting from a backscattering of the second transmission radiation (121a) at an object of measurement which is situated in a second detection space (125).

9. Sensor apparatus according to one of the preceding claims, in which

- the first transmitting device (111) and the first receiving device (112) are realised by means of a first reflective light barrier (110) and/or
- the second transmitting device (121) and the second receiving device (122) are realised by means of a second reflective light barrier (120).

10. Sensor apparatus according to one of the preceding claims, in which

- the direction of the first transmission radiation (111a) is inclined relative to a normal of the assembly surface in the direction of the first receiving device (112), and/or
- the direction of the second transmission radiation (121a) is inclined relative to the normal of the assembly surface in the direction of the second receiving device (122).

11. Sensor apparatus according to one of the preceding claims, in which the direction of the first transmission radiation (11a) and the direction of the second transmission radiation (121a) run parallel to each other.

12. Sensor apparatus according to one of the preceding claims, in which the first transmitting device (111) and the second transmitting device (121) and the first receiving device (112) and the second receiving device (122) in each case represent an external boundary of the sensor apparatus.

13. Proximity sensor for optically detecting the presence of an object (6) in a detection region, wherein said proximity sensor comprises a sensor apparatus as claimed in one of the claims 1 to 12.

14. Hazard alarm for recognising a hazard situation, in particular for detecting smoke in a monitored smoke, said hazard alarm comprising a sensor apparatus according to one of claims 1 to 12.

**Revendications**

1. Dispositif de détection pour la détection optique d'un objet (6), le dispositif de détection comportant :

- un premier dispositif d'émission (3) qui est configuré pour émettre un premier rayonnement d'émission ;
- un premier dispositif de réception (11) qui est configuré pour recevoir un premier rayonnement de réception ;
- un deuxième dispositif de réception (12) qui est configuré pour recevoir un deuxième rayonnement de réception ; et
- une unité d'évaluation (16, 135) qui est montée en aval du premier dispositif de réception (11) et du deuxième dispositif de réception (12),

le premier rayonnement de réception et le deuxième rayonnement de réception présentant une lumière diffuse qui est générée dans le cas d'une diffusion au moins partielle du premier rayonnement d'émission au niveau de l'objet (6) et le dispositif de détection comportant une unité de soustraction (13, 14, 136, 236) qui est couplée au premier dispositif de réception (11, 112, 212) et au deuxième dispositif de réception (12, 122, 222) côté entrée et à l'unité d'évaluation (16, 135) côté sortie de sorte qu'un signal différentiel est envoyé sur l'unité d'évaluation (16, 135).

2. Dispositif de détection selon la revendication 1, le premier dispositif de réception (11) et le deuxième dispositif de réception (12) étant montés parallèles entre eux avec polarité inversée.

3. Dispositif de détection selon la revendication 1 ou 2, l'unité d'évaluation (16, 135) étant configurée de façon qu'il est possible de déterminer une fraction de courant continu du signal différentiel et une fraction de courant alternatif du signal différentiel.

4. Dispositif de détection selon l'une des revendications précédentes, comportant en outre :

- un deuxième dispositif d'émission (5) configuré pour émettre un deuxième rayonnement d'émission, le premier rayonnement d'émission et le deuxième rayonnement d'émission présentant une lumière diffuse qui est générée par une diffusion au moins partielle du deuxième rayonnement d'émission au niveau de l'objet (6) et
- un dispositif de commande (1, 2, 4, 130) qui est couplé au premier dispositif d'émission (3, 111) et au deuxième dispositif d'émission (5, 121) et qui est configuré de manière telle que le premier dispositif d'émission (3, 111) peut être activé indépendamment du deuxième dispositif d'émission (5, 121).

**5.** Dispositif de détection selon l'une des revendications précédentes, comportant en outre un élément de commutation (56) qui est couplé au premier dispositif d'émission (3) de manière telle que le premier dispositif d'émission (3) peut être désactivé.

**6.** Dispositif de détection selon l'une des revendications précédentes, comportant en outre un élément de réglage (81) qui est situé dans un chemin de signal d'émission allant vers le premier dispositif d'émission (3) ou dans un chemin de signal de réception venant du premier dispositif de réception (11) et qui peut être varié de manière telle que le signal de différence peut être réglé sur une valeur prédéterminée.

**7.** Dispositif de détection selon l'une des revendications précédentes, le premier dispositif d'émission (3), le premier dispositif de réception (11) et le deuxième dispositif de réception (12) étant disposés et orientés de manière telle relativement les uns par rapport aux autres que :

- dans le cas d'une diffusion du premier rayonnement d'émission au niveau de l'objet (6) dans un rayonnement environnant donné, le premier signal de sortie du premier dispositif de réception (11) est différent du deuxième signal de sortie du deuxième dispositif de réception (12) et
- ces signaux de sortie présentent, dans le même rayonnement environnant, des différences moins fortes après un mouvement d'éloignement de l'objet (6) par rapport au dispositif de détection.

**8.** Dispositif de détection selon l'une des revendications précédentes, comportant en outre un élément de base (105) avec une surface de montage plane,

- le premier dispositif d'émission, le premier dispositif de réception, un deuxième dispositif d'émission (121) configuré pour émettre un deuxième rayonnement d'émission (121a) et le deuxième dispositif de réception (122) étant montés sur la surface de montage ;
- le premier dispositif de réception (112) étant situé à côté du premier dispositif d'émission (111) et étant configuré pour recevoir le premier rayonnement de réception (112a) qui résulte d'une rétrodiffusion du premier rayonnement d'émission (111a) au niveau d'un objet de mesure qui se trouve dans un premier espace de détection (115) et
- le deuxième dispositif de réception (122) étant situé à côté du deuxième dispositif d'émission (121) et étant configuré pour recevoir le deuxième rayonnement de réception (122a), lequel résulte d'une rétrodiffusion du deuxième rayonnement d'émission (121a) au niveau d'un objet de mesure qui se trouve dans un deuxième espace de détection (125).

**9.** Dispositif de détection selon l'une des revendications précédentes, dans lequel :

- le premier dispositif d'émission (111) et le premier dispositif de réception (112) sont réalisés par un premier barrage photoélectrique de réflexion (110) et/ou
- le deuxième dispositif d'émission (121) et le deuxième dispositif de réception (122) sont réalisés par un deuxième barrage photoélectrique de réflexion (120).

**10.** Dispositif de détection selon l'une des revendications précédentes, dans lequel :

- la direction du premier rayonnement d'émission (111a) est inclinée par rapport à une normale de la surface de montage en direction du premier dispositif de réception (112) et/ou
- la direction du deuxième rayonnement d'émission (121a) est inclinée par rapport à la normale de la surface de montage en direction du deuxième dispositif de réception (122).

**11.** Dispositif de détection selon l'une des revendications précédentes, dans lequel la direction du premier rayonnement d'émission (111a) et la direction du deuxième rayonnement d'émission (121a) sont parallèles entre elles.

**12.** Dispositif de détection selon l'une des revendications précédentes, dans lequel le premier dispositif d'émission (111) et le deuxième dispositif d'émission (121) ainsi que le premier dispositif de réception (112) et le deuxième dispositif de réception (122) représentent respectivement une limitation extérieure du dispositif de détection.

**13.** Capteur d'approche pour la détection optique de la présence d'un objet (6) dans une zone de détection, le capteur d'approche comportant un dispositif de détection selon l'une des revendications 1 à 12.

**14.** Détecteur de danger destiné à reconnaître une situation de danger, en particulier pour détecter de la fumée dans un espace surveillé, le détecteur de danger comportant un dispositif de détection selon l'une des revendications 1 à 12.

FIG 1

FIG 2

FIG 3

FIG 4

FIG 5

FIG 6

## FIG 7

## FIG 8

FIG 9

100

111 110 112 136 135 130 121 120 122 105

140

111a    112a      121a    122a

115      125

FIG 10

212 212b

+ 236   236b

222 222b

−

## FIG *11*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4857895 A
- US 5352901 A